# EUROPEAN PATENT SPECIFICATION

(11) **EP 4 557 650 B1**
(45) Date of publication and mention of the grant of the patent: **23.09.2026**
(21) Application number: 22950668.8
(22) Date of filing: 14.07.2022
(51) Int. Cl.: H04L 1/1867, H04L 1/1829, H04L 1/08, H04L 1/22

(54) **DATA TRANSMISSION METHOD AND APPARATUS**
DATENÜBERTRAGUNGSVERFAHREN UND -VORRICHTUNG
PROCÉDÉ ET APPAREIL DE TRANSMISSION DE DONNÉES

(43) Date of publication of application: 21.05.2025
(73) Proprietor: Beijing Xiaomi Mobile Software Co., Ltd., Beijing 100085 (CN)
(72) Inventor: YANG, Xing, Beijing 100085 (CN)
(74) Representative: Stöckeler, Ferdinand
(86) International application number: PCT/CN2022/105834
(87) International publication number: WO 2024/011547

(56) References cited:
- WO-A1-2021/013236
- WO-A1-2021/081898
- WO-A1-2021/244264
- CN-A- 110 958 090
- CN-A- 114 422 094
- US-A1- 2019 239 112
- US-B2- 11 228 902
- OPPO: "Discussion on PDCP aspects for NR-V2X", 3GPP DRAFT; R2-1903218 - LEFT ISSUES ON PDCP FOR NR-V2X, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Xi’an, China; 20190408 - 20190412, 29 March 2019 (2019-03-29), Mobile Competence Centre ; 650, route des Lucioles ; F-06921 Sophia-Antipolis Cedex ; France , XP051692494
- HUAWEI, HISILICON: "On sidelink packet duplication for Mode 4", 3GPP DRAFT; R2-1804640 ON SIDELINK PACKET DUPLICATION FOR MODE 4, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Sanya, China; 20180416 - 20180420, 6 April 2018 (2018-04-06), Mobile Competence Centre ; 650, route des Lucioles ; F-06921 Sophia-Antipolis Cedex ; France , XP051415623

## Description

### TECHNICAL FIELD

The present disclosure relates to the field of communication technology, and more particularly to a method and apparatus for data transmission.

### BACKGROUND

In order to support a direct communication between terminals, a sidelink communication manner is introduced, and an interface between terminals is PC-5. According to a corresponding relationship between sending and receiving, three transmission manners are supported in a sidelink: a unicast, a multicast and a broadcast. In a unicast connection, each terminal corresponds to one destination identifier. In a multicast connection, each terminal may belong to one or more groups, and each group corresponds to one destination identifier. In a broadcast connection, all terminals correspond to at least one destination identifier.

In the related art, the terminal in a new radio (NR) system is not supported to perform a repeat transmission of sidelink data, which is a problem that needs to be solved urgently.

US2019239112A1 relates to a Method at a transmitting Vehicle User Equipment (Tx V-UE). The method includes: transmitting, to a Radio Access Network (RAN) a set of parameters comprising any one or more of: a capability of the Tx V-UE, V2X service information and channel information; receiving, from the RAN, any one or more of: a Sidelink Radio Bearer (SL-RB) configuration; an activation status of a primary Sidelink (SL) channel; a respective activation status of one or more secondary SL channels, and at least one grant for SL radio resources associated with each activated SL channel; and transmitting, to a Receiving Vehicle User Equipment (Rx V-UE), duplicated packets using SL radio resources of the primary SL channel and the one or more secondary SL channels.

US2019215685A1 relates to systems and methods for performing carrier aggregation in wireless sidelink communications. The method includes: obtaining configuration information related to sidelink data transmission between the first node and at least one second node, wherein the configuration information comprises one or more rules related to carrier aggregation for the sidelink data transmission, wherein the one or more rules comprise information related to a reliability level associated with the sidelink data transmission; and transmitting the sidelink data to the at least one second node on a plurality of carriers based on the configuration information.

WO2021244264A1 relates to a communication method and a communication apparatus. In the technical solution, a terminal device receives configuration information sent by a network device, the configuration information comprising reliability information and channel busy ratio (CBR) information, the reliability information comprising information for indicating a reliability range or level, and the CBR information comprising information for indicating a CBR range or level; and the terminal device determines a packet data convergence protocol (PDCP) duplication processing operation according to service-related information and the configuration information, the service-related information comprising related information of a service corresponding to a PDCP entity, and the processing operation comprising an activation or deactivation operation. By means of the method of the embodiments of the present application, a terminal device can accurately determine whether to activate PDCP duplication according to configuration information, thereby ensuring the reliability of transmission.

### SUMMARY

Embodiments of the present disclosure provide a method and an apparatus for data transmission to support a first terminal in an NR system to perform a repeat transmission of sidelink data, so as to improve a communication quality.

The present invention is defined in the independent claim 1, and the preferable features according to the present invention are defined in the dependent claims. Any embodiment in the present disclosure that does not fall within the scope of the present invention should be regarded as an example for understanding the present invention.

In a first aspect, an embodiment of the present disclosure provides a method for data transmission, according to appended independent claim 1.

In a second aspect, an embodiment of the present disclosure provides another method for data transmission, according to appended independent claim 8.

In a fifth aspect, an embodiment of the present disclosure provides a communication apparatus, according to appended independent claim 12.

In a sixth aspect, an embodiment of the present disclosure provides a communication apparatus, according to appended independent claim 13.

In a twelfth aspect, an embodiment of the present disclosure provides a computer-readable storage medium for storing instructions used by the above first terminal, according to appended independent claim 14.

### BRIEF DESCRIPTION OF THE DRAWINGS

In order to clearly illustrate the technical solutions in the embodiments of the present disclosure or the related art, drawings applied to the embodiments of the present disclosure or the related art are described below.
FIG. 1 is a block diagram of an architecture of a communication system provided by an embodiment of the present disclosure.
FIG. 2 is a flow chart of a method for data transmission provided by an embodiment of the present disclosure.
FIG. 3 is a flow chart of another method for data transmission provided by an embodiment of the present disclosure.
FIG. 4 is a flow chart of yet another method for data transmission provided by an embodiment of the present disclosure.
FIG. 5 is a flow chart of a further method for data transmission provided by an embodiment of the present disclosure.
FIG. 6 is a flow chart of a further method for data transmission provided by an embodiment of the present disclosure.
FIG. 7 is a flow chart of a further method for data transmission provided by an embodiment of the present disclosure.
FIG. 8 is a flow chart of a further method for data transmission provided by an embodiment of the present disclosure.
FIG. 9 is a flow chart of a further method for data transmission provided by an embodiment of the present disclosure.
FIG. 10 is a flow chart of a further method for data transmission provided by an embodiment of the present disclosure.
FIG. 11 is a block diagram of a communication apparatus provided by an embodiment of the present disclosure.
FIG. 12 is a block diagram of another communication apparatus provided by an embodiment of the present disclosure.
FIG. 13 is a schematic block diagram of a chip provided by an embodiment of the present disclosure.

### DETAILED DESCRIPTION

In order to better understand a method and an apparatus for data transmission described in embodiments of the present disclosure, a communication system to which embodiments of the present disclosure are applicable is firstly described below.

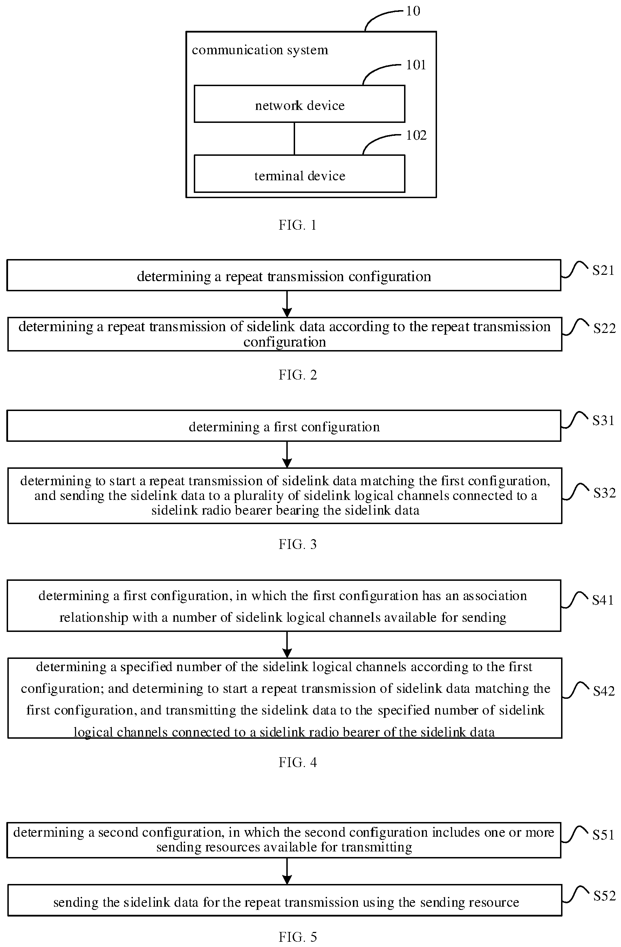

FIG. 1 is a schematic diagram of an architecture of a communication system provided in an embodiment of the present disclosure. Referring to FIG. 1, the communication system may include, but is not limited to, one network device and one terminal. The number and forms of the devices shown in FIG. 1 are only as an example and do not constitute a limitation on embodiments of the present disclosure. The communication system may include two or more network devices and two or more terminals in practical applications. As an example for illustration, the communication system 10 shown in FIG. 1 includes one network device 101 and one terminal 102.

It should be noted that the technical solutions of the embodiments of the present disclosure may be applied to various communication systems, for example, a long term evolution (LTE) system, a 5th generation (5G) mobile communication system, a 5G new radio (NR) system, or other future new mobile communication systems. It should also be noted that a sidelink in the embodiments of the present disclosure may also be called a side link or a direct communication link.

The network device 101 in the embodiments of the present disclosure is an entity on a network side for sending or receiving signals. For example, the network device 101 may be an evolved NodeB (eNB), a transmission reception point (TRP), a next generation NodeB (gNB) in a NR system, a base station in other future mobile communication systems, or an access node in a wireless fidelity (Wi-Fi) system. The specific technology and specific device form adopted by the base station are not limited in the embodiments of the present disclosure. The base station provided by the embodiments of the present disclosure may include a central unit (CU) and distributed units (DUs). The CU may also be called a control unit. Using the CU-DU structure allows to split the base station, for example a protocol layer of the base station, so that some of functions of the protocol layer are centrally controlled in the CU, some or all of the remaining functions of the protocol layer are distributed in the DUs, and the CU centrally controls the DUs.

The terminal 102 in the embodiments of the present disclosure is an entity on a user side for receiving or sending signals, such as a mobile phone. The terminal may also be called a terminal, a user equipment (UE), a mobile station (MS), a mobile terminal (MT), and so on. The terminal may be a device with a communication function, such as a vehicle, a smart vehicle, a mobile phone, a wearable device, a tablet Pad, a computer with a wireless transceiving function, a virtual reality (VR) terminal, an augmented reality (AR) terminal, a wireless terminal in an industrial control, a wireless terminal in a self-driving, a wireless terminal in a remote medical surgery, a wireless terminal in a smart grid, a wireless terminal in a transportation safety, a wireless terminal in a smart city, a wireless terminal in a smart home, etc. The specific technology and the specific device form adopted by the terminal are not limited in the embodiments of the present disclosure.

It may be understood that the communication system described in the embodiments of the present disclosure is intended to illustrate the technical solutions of the embodiments of the present disclosure more clearly, and does not constitute a limitation on the technical solutions provided by the embodiments of the present disclosure. Those ordinary skilled in the art will know that with an evolution of a system architecture and an emergence of a new service scenario, the technical solutions provided by the embodiments of the present disclosure are also applicable to similar technical problems.

A method and an apparatus for data transmission provided by the present disclosure will be described in detail below with reference to the accompanying drawings.

Referring to FIG. 2, FIG. 2 is a flow chart of a method for data transmission provided by an embodiment of the present disclosure.

As shown in FIG. 2, the method is performed by a first terminal and applied to an NR sidelink data repeat transmission. The method may include, but is not limited to, the following steps.

In step S21, a repeat transmission configuration is determined.

In an embodiment of the present disclosure, the first terminal determines the repeat transmission configuration. The repeat transmission configuration may instruct the first terminal to determine whether to perform a repeat transmission of sidelink data and/or how to perform a repeat transmission of sidelink data.

The first terminal may determine the repeat transmission configuration according to a protocol agreement, or may also determine the repeat transmission configuration according to an instruction of a network device, or may also determine the repeat transmission configuration according to an instruction of a second terminal.

In a case that the first terminal determines the repeat transmission configuration according to the instruction of the second terminal, the second terminal may determine the repeat transmission configuration in advance according to the protocol agreement or the instruction of the network device, and further sends the repeat transmission configuration to the first terminal. Therefore, the first terminal may determine the repeat transmission configuration according to the instruction of the second terminal.

Of course, a manner in which the first terminal determines the repeat transmission configuration is not limited to this. The first terminal may also determine the repeat transmission configuration according to its own configuration. For example, an association relationship between the first terminal's own configuration and the repeat transmission configuration may be determined in advance. The first terminal may determine the repeat transmission configuration according to its own configuration and the association relationship in a case that the first terminal determines its own configuration.

In some embodiments, configuration information sent by a network device or a second terminal is received; and the repeat transmission configuration is determined according to the configuration information.

In an embodiment of the present disclosure, the first terminal receives the configuration information sent by the network device, and determines the repeat transmission configuration according to the configuration information.

In an embodiment of the present disclosure, the first terminal receives the configuration information sent by the second terminal, and determines the repeat transmission configuration according to the configuration information.

The second terminal may determine the repeat transmission configuration in advance according to the protocol agreement or the instruction of the network device, and further sends the configuration information to the first terminal, to send the repeat transmission configuration to the first terminal. Therefore, the first terminal may determine the repeat transmission configuration according to the configuration information of the second terminal.

In step S22, a repeat transmission of sidelink data is determined according to the repeat transmission configuration.

In an embodiment of the present disclosure, the first terminal determines the repeat transmission configuration, and then determines the repeat transmission of the sidelink data according to the repeat transmission configuration.

In an LTE system, the network device may send the configuration information to the first terminal, indicating the repeat transmission configuration. The repeat transmission configuration carries a reliability threshold. In a case that a reliability indicator (ProSe Per Packet Reliability, PPPR) of the sidelink data in a sidelink radio bearer, i.e., a packet data convergence protocol (PDCP) entity, of the first terminal is lower than the reliability threshold, the repeat transmission is started to send the sidelink data of the sidelink radio bearer, i.e., the PDCP entity, to two or more sidelink radio link control (RLC) entities, i.e., sidelink logical channels. The first terminal sends sidelink data of the sidelink logical channels connected to the same PDCP entity via different sidelink frequencies.

In an NR system, the sidelink data no longer provides the reliability indicator (PPPR), so an LTE control method cannot be reused, and the first terminal may no longer control the repeat transmission according to the reliability threshold carried in the repeat transmission configuration.

In an embodiment of the present disclosure, for the first terminal in the NR system, the repeat transmission configuration may include other information, such as: a sidelink destination address. It is determined to perform the repeat transmission of the sidelink data in a case that an address to which the sidelink data is sent is consistent with the sidelink destination address. The sidelink data of the sidelink radio bearer may be sent to two or more sidelink logical channels.

Of course, for the first terminal in the NR system, information included in the repeat transmission configuration is not limited to the sidelink destination address, but may also include a specified sending method, a specified sending content, a specified sidelink radio bearer, and so on.

By implementing the embodiments of the present disclosure, the first terminal determines the repeat transmission configuration, and determines the repeat transmission of the sidelink data according to the repeat transmission configuration. Therefore, the first terminal in the NR system may be supported to perform the repeat transmission of the sidelink data, so as to improve a communication quality.

In some embodiments, the repeat transmission configuration includes one or more sets of first configurations, and the first configuration includes at least one of: a sidelink destination address; a specified sending method; a specified sending content; a specified sidelink radio bearer; or a specified quality of service (QoS) requirement of data.

In an embodiment of the present disclosure, the first terminal determines the repeat transmission configuration, the repeat transmission configuration includes the one or more sets of first configurations, and the first terminal determines the repeat transmission of the sidelink data according to the one or more sets of first configurations.

The first configuration includes one or more of the sidelink destination address, the specified sending method, the specified sending content, the sidelink radio bearer, and the quality of service (QoS) requirement of the data. The repeat transmission configuration includes the one or more sets of first configurations, and information included in each set of first configurations may be the same or different in a case that the repeat transmission configuration includes a plurality of sets of first configurations.

For example, the repeat transmission configuration includes two sets of first configurations, one set of first configurations includes the sidelink destination address and the specified sending method, and the other set of first configurations includes the specified sending content and the sidelink radio bearer.

For example, the repeat transmission configuration includes two sets of first configurations, one set of first configurations includes the sidelink destination address and the specified sending method, and the other set of first configurations also includes the sidelink destination address and the specified sending method.

It should be noted that the above examples are for illustration only. Information included in the first configuration may further be one or more of the sidelink destination address, the specified sending method, the specified sending content, the sidelink radio bearer and the quality of service (QoS) requirement of the data. The above examples are not intended to be specific limitations on the embodiments of the present disclosure.

The first configuration includes the specified sending method, and the specified sending method may be a unicast, a multicast, or a broadcast, etc.

The first configuration includes the specified sending content, and the specified sending content may be a discovery signal, a communication signal, a relay discovery signal, a relay communication signal or a non-relay discovery signal, etc.

The first configuration includes the specified sidelink radio bearer, and the specified sidelink radio bearer may be identified by SLRB-Uu-ConfigIndex.

The first configuration includes the specified QoS requirement of the data, and the specified QoS requirement of the data may be indicated by a 5G QoS identifier (5QI) or a sending file (tx profile).

In some embodiments, the first terminal determining the repeat transmission of the sidelink data according to the repeat transmission configuration includes: the first terminal determining to start a repeat transmission of sidelink data matching the first configuration, and sending the sidelink data to a plurality of sidelink logical channels connected to a sidelink radio bearer bearing the sidelink data.

In an embodiment of the present disclosure, the repeat transmission configuration includes the one or more sets of first configurations. The first terminal determines the repeat transmission configuration, determines the first configuration, and determines the repeat transmission of the sidelink data according to the repeat transmission configuration. The first terminal may determine to start the repeat transmission of the sidelink data matching the first configuration, and send the sidelink data to the plurality of sidelink logical channels connected to the sidelink radio bearer bearing the sidelink data.

In a possible implementation, the first terminal determines the first configuration, the first configuration includes the sidelink destination address, and the first terminal determines to start the repeat transmission of the sidelink data in a case that an address of the sidelink data matches the sidelink destination address, and sends the sidelink data to the plurality of sidelink logical channels connected to the sidelink radio bearer bearing the sidelink data.

In another possible implementation, the first terminal determines the first configuration, the first configuration includes the specified sending method, and the first terminal determines to start the repeat transmission of the sidelink data in a case that a sending method of the sidelink data matches the specified sending method, and sends the sidelink data to the plurality of sidelink logical channels connected to the sidelink radio bearer bearing the sidelink data.

In yet another possible implementation, the first terminal determines the first configuration, the first configuration includes the specified sending content, and the first terminal determines to start the repeat transmission of the sidelink data in a case that a sending content of the sidelink data matches the specified sending content, and sends the sidelink data to the plurality of sidelink logical channels connected to the sidelink radio bearer bearing the sidelink data.

In a further possible implementation, the first terminal determines the first configuration, the first configuration includes the specified sidelink radio bearer, and the first terminal determines to start the repeat transmission of the sidelink data in a case that a sidelink radio bearer bearing the sidelink data matches the specified sidelink radio bearer, and sends the sidelink data to the plurality of sidelink logical channels connected to the sidelink radio bearer bearing the sidelink data.

In a further possible implementation, the first terminal determines the first configuration, the first configuration includes the quality of service (QoS) requirement of the data, and the first terminal determines to start the repeat transmission of the sidelink data in a case that a QoS requirement of the sidelink data matches the specified quality of service (QoS) requirement, and sends the sidelink data to the plurality of sidelink logical channels connected to the sidelink radio bearer bearing the sidelink data.

It should be noted that, in the above possible implementations, the information included in the first configuration is not limited to the above examples, and may also include a variety of information other than the above examples. The above possible implementations are only for illustration and not for specific limitations on the embodiments of the present disclosure.

It should also be noted that, in the above possible implementations, as an example for illustration, the first terminal determines one set of first configurations. In an embodiment of the present disclosure, the first terminal may also determine a plurality of sets of first configurations. In a case that it is determined that the sidelink data matches at least one set of first configurations of the plurality of sets of first configurations, the repeat transmission of the sidelink data is started and the sidelink data is sent to the plurality of sidelink logical channels connected to the sidelink radio bearer bearing the sidelink data.

In some embodiments, the sidelink logical channel is determined by a sidelink radio link control (RLC) entity.

In an embodiment of the present disclosure, the first terminal sends the sidelink data to the plurality of sidelink logical channels connected to the sidelink radio bearer bearing the sidelink data, and the sidelink logical channel is determined by the sidelink radio link control (RLC) entity.

In some embodiments, the first configuration has an association relationship with a number of sidelink logical channels available for sending.

In an embodiment of the present disclosure, the repeat transmission configuration includes the first configuration, and the first configuration has the association relationship with the number of the sidelink logical channels available for sending.

For example, the first configuration includes the specified quality of service (QoS) requirement of the data, and the specified quality of service (QoS) requirement of the data may be indicated by the 5QI. The number of the sidelink logical channels is 2 in a case that the 5QI is 1, and the number of the sidelink logical channels is 3 in a case that the 5QI is 2. Sidelink data with the 5QI of 1 is sent using 2 sidelink logical channels, and sidelink data with the 5QI of 2 is sent using 3 sidelink logical channels.

In some embodiments, the first terminal determining the repeat transmission of the sidelink data according to the repeat transmission configuration includes: the first terminal determining specified number of the sidelink logical channels according to the first configuration; and determining to start a repeat transmission of sidelink data matching the first configuration, and transmitting the sidelink data to the specified number of sidelink logical channels connected to a sidelink radio bearer of the sidelink data.

In an embodiment of the present disclosure, the first configuration has the association relationship with the number of the sidelink logical channels available for sending. The first terminal may determine the specified number of the sidelink logical channels according to the first configuration and the association relationship, then determines to start the repeat transmission of the sidelink data matching the first configuration, and transmits the sidelink data to the specified number of sidelink logical channels connected to the sidelink radio bearer of the sidelink data.

For example, the first configuration includes the specified quality of service (QoS) requirement of the data, which may be indicated by the 5QI. The first configuration has the association relationship with the number of the sidelink logical channels available for sending. The number of the sidelink logical channels is 2, in a case that the 5QI indicates to be 1. In an embodiment of the present disclosure, the first terminal may determine that the number of the sidelink logical channels is 2 according to the specified quality of service (QoS) requirement and the association relationship, then determines to start the repeat transmission of the sidelink data matching the first configuration, and transmits the sidelink data to 2 sidelink logical channels connected to the sidelink radio bearer of the sidelink data.

It should be noted that the information included in the first configuration may also be other information other than the specified quality of service (QoS) requirement of the data, and the other information may have an association relationship with the number of the sidelink logical channels available for sending. The above examples are only for illustration and are not intended to be specific limitations on the embodiments of the present disclosure.

In some embodiments, the repeat transmission configuration includes one or more sets of second configurations, and the second configuration includes one or more sending resources available for transmitting.

In an embodiment of the present disclosure, the first terminal determines the repeat transmission configuration, the repeat transmission configuration includes the one or more sets of second configurations, and the second configuration includes the one or more sending resources available for transmitting. The sending resource is used to send the sidelink data.

In some embodiments, the sending resource is a sidelink sending frequency or a sidelink sending resource pool.

In an embodiment of the present disclosure, the first terminal determines the repeat transmission configuration, the repeat transmission configuration includes the one or more sets of second configurations, and the second configuration includes the one or more sending resources available for transmitting. The second configuration includes one or more sidelink sending frequencies available for transmitting, or the second configuration includes one or more sidelink sending resource pools available for transmitting.

In some embodiments, the first terminal sends the sidelink data for the repeat transmission using the sending resource.

In an embodiment of the present disclosure, the first terminal determines the repeat transmission configuration, the repeat transmission configuration includes the one or more sets of second configurations, the second configuration includes the one or more sending resources available for transmitting, and the first terminal sends the sidelink data for the repeat transmission using the sending resource.

For example, the second configuration includes two sending resources, and the first terminal uses the two sending resources to send same sidelink data to perform the repeat transmission of the sidelink data.

For example, the repeat transmission configuration includes two sets of second configurations, one set of second configurations includes two sending resources, and the other set of second configurations includes four sending resources. The first terminal uses six sending resources to send same sidelink data to perform the repeat transmission of the sidelink data.

In some embodiments, the first terminal sending the sidelink data for the repeat transmission using the sending resource includes: sending the sidelink data from the same sidelink radio bearer using different sending resources.

In an embodiment of the present disclosure, the first terminal sends the sidelink data from the same sidelink radio bearer using different sending resources.

For example, the second configuration includes two sending resources, and the first terminal uses the two sending resources to send the sidelink data from the same sidelink radio bearer to perform the repeat transmission of the sidelink data.

For example, the repeat transmission configuration includes two sets of second configurations, one set of second configurations includes two sending resources, and the other set of second configurations includes four sending resources. The first terminal uses six sending resources to send the sidelink data from the same sidelink radio bearer to perform the repeat transmission of the sidelink data.

In some embodiments, the second configuration has an association relationship with a data characteristic.

In an embodiment of the present disclosure, the first terminal determines the repeat transmission configuration, the repeat transmission configuration includes the one or more sets of second configurations, and the second configuration has the association relationship with the data characteristic.

In some embodiments, the data characteristic includes at least one of: a QoS requirement of data; a sending method of data; a sidelink logical channel where data is located; or a sidelink radio bearer where data is located.

The data characteristic includes the QoS requirement of the data, the data characteristic includes the sending method of the data, the data characteristic includes the sidelink logical channel where the data is located, and the data characteristic includes the sidelink radio bearer where the data is located.

In some embodiments, the first terminal sends sidelink data matching the data characteristic using the sending resource.

In an embodiment of the present disclosure, the repeat transmission configuration includes the one or more sets of second configurations. The first terminal determines the repeat transmission configuration and determines the second configuration. The second configuration includes the one or more sending resources available for transmitting. The second configuration has the association with the data characteristic. The repeat transmission of the sidelink data is determined according to the repeat transmission configuration. It may be determined to send the sidelink data matching the data characteristic using the sending resource.

For example, the data characteristic is the QoS requirement of the data. The first terminal may determine sidelink data matching the QoS requirement of the data, determines the one or more sending resources according to the second configuration, and sends the sidelink data matching the data characteristic using the sending resource.

It should be noted that the data characteristic may also be the sending method of the data, the sidelink logical channel where the data is located, the sidelink radio bearer where the data is located, etc. The above examples are only for illustration and are not intended to be specific limitations on the embodiments of the present disclosure.

In some embodiments, the repeat transmission configuration includes a third configuration, the third configuration is a corresponding relationship between a sidelink logical channel and a sidelink radio bearer of the sidelink data, and the sidelink radio bearer is connected to a plurality of sidelink logical channels.

In an embodiment of the present disclosure, the first terminal determines the repeat transmission configuration and determines the third configuration. The third configuration is the corresponding relationship between the sidelink logical channel and the sidelink radio bearer of the sidelink data, and the sidelink radio bearer is connected to the plurality of sidelink logical channels.

In some embodiments, the first terminal determining the repeat transmission of the sidelink data according to the repeat transmission configuration includes: the first terminal determining a first sidelink logical channel as a primary transmission sidelink logical channel of the sidelink radio bearer; and sending the sidelink data using the first sidelink logical channel in response to that the repeat transmission of the sidelink data is not started.

In an embodiment of the present disclosure, the first terminal determines the repeat transmission configuration, the repeat transmission configuration includes the third configuration, the third configuration is the corresponding relationship between the sidelink logical channel and the sidelink radio bearer of the sidelink data, and the sidelink radio bearer is connected to the plurality of sidelink logical channels. The plurality of sidelink logical channels are provided to be used to send the sidelink data, in a case that the repeat transmission of the sidelink data is not started. Based on this, in an embodiment of the present disclosure, the first terminal determines the first sidelink logical channel as the primary transmission sidelink logical channel of the sidelink radio bearer, and sends the sidelink data using the first sidelink logical channel in a case that the repeat transmission of the sidelink data is not started.

The first terminal determines that the repeat transmission of the sidelink data is not started, which may be that the first terminal does not confirm the repeat transmission configuration, or may also be that the first terminal determines that the sidelink data does not match the first configuration and does not start the repeat transmission, and so on.

In an embodiment of the present disclosure, the first terminal determines the first sidelink logical channel as the primary transmission sidelink logical channel of the sidelink radio bearer, and the first sidelink logical channel is one of the plurality of sidelink logical channels connected to the sidelink radio bearer bearing the sidelink data. The first terminal may pre-determine one of the sidelink logical channels as the first sidelink logical channel, and determines the first sidelink logical channel as the primary transmission sidelink logical channel of the sidelink radio bearer.

In some embodiments, the first terminal determining the repeat transmission of the sidelink data according to the repeat transmission configuration includes: the first terminal determining the sidelink logical channel connected to the sidelink radio bearer of the sidelink data according to the third configuration; and randomly selecting one sidelink logical channel and sending the sidelink data to the randomly selected sidelink logical channel, in response to that the repeat transmission of the sidelink data is not started.

In an embodiment of the present disclosure, the first terminal determines the repeat transmission configuration, the repeat transmission configuration includes the third configuration, the third configuration is the corresponding relationship between the sidelink logical channel and the sidelink radio bearer of the sidelink data, and the sidelink radio bearer is connected to the plurality of sidelink logical channels. The first terminal determines the sidelink logical channel connected to the sidelink radio bearer of the sidelink data according to the third configuration. The plurality of sidelink logical channels are provided to be used to send the sidelink data, in a case that the repeat transmission of the sidelink data is not started. Based on this, in an embodiment of the present disclosure, the first terminal randomly selects one sidelink logical channel and sends the sidelink data to the randomly selected sidelink logical channel, in a case that the repeat transmission of the sidelink data is not started.

The first terminal determines that the repeat transmission of the sidelink data is not started, which may be that the first terminal does not confirm the repeat transmission configuration, or may also be that the first terminal determines that the sidelink data does not match the first configuration and does not start the repeat transmission, and so on.

The first configuration, the second configuration, and the third configuration may be implemented separately or in any combination.

Referring to FIG. 3, FIG. 3 is a flow chart of another method for data transmission provided by an embodiment of the present disclosure.

As shown in FIG. 3, the method is performed by a first terminal and applied to an NR sidelink data repeat transmission. The method may include, but is not limited to, the following steps.

In step S31, a first configuration is determined.

In an embodiment of the present disclosure, the first terminal determines the first configuration. The first configuration may instruct the first terminal to determine whether to perform a repeat transmission of sidelink data and/or how to perform a repeat transmission of sidelink data.

The first terminal may determine the first configuration according to a protocol agreement, or may also determine the first configuration according to an instruction of a network device, or may also determine the first configuration according to an instruction of a second terminal.

In some embodiments, the first terminal determines one or more sets of first configurations, and the first configuration includes at least one of: a sidelink destination address; a specified sending method; a specified sending content; a specified sidelink radio bearer; or a specified quality of service (QoS) requirement of data.

In an embodiment of the present disclosure, the first terminal determines the one or more sets of first configurations, and the first terminal determines the repeat transmission of the sidelink data according to the one or more sets of first configurations.

The first configuration includes one or more of the sidelink destination address, the specified sending method, the specified sending content, the sidelink radio bearer, and the quality of service (QoS) requirement of the data. The repeat transmission configuration includes the one or more sets of first configurations, and information included in each set of first configurations may be the same or different in a case that the repeat transmission configuration includes a plurality of sets of first configurations.

For example, the first terminal determines two sets of first configurations, one set of first configurations includes the sidelink destination address and the specified sending method, and the other set of first configurations includes the specified sending content and the sidelink radio bearer.

For example, the first terminal determines two sets of first configurations, one set of first configurations includes the sidelink destination address and the specified sending method, and the other set of first configurations also includes the sidelink destination address and the specified sending method.

It should be noted that the above examples are for illustration only. Information included in the first configuration may further be one or more of the sidelink destination address, the specified sending method, the specified sending content, the sidelink radio bearer and the quality of service (QoS) requirement of the data. The above examples are not intended to be specific limitations on the embodiments of the present disclosure.

The first configuration includes the specified sending method, and the specified sending method may be a unicast, a multicast, or a broadcast, etc.

The first configuration includes the specified sending content, and the specified sending content may be a discovery signal, a communication signal, a relay discovery signal, a relay communication signal or a non-relay discovery signal, etc.

The first configuration includes the specified sidelink radio bearer, and the specified sidelink radio bearer may be identified by SLRB-Uu-ConfigIndex.

The first configuration includes the specified QoS requirement of the data, and the specified QoS requirement of the data may be indicated by a 5G QoS identifier (5QI) or a sending file (tx profile).

In step S32, it is determined to start a repeat transmission of sidelink data matching the first configuration, and the sidelink data is sent to a plurality of sidelink logical channels connected to a sidelink radio bearer bearing the sidelink data.

In an embodiment of the present disclosure, the first terminal determines the first configuration, determines to start the repeat transmission of the sidelink data matching the first configuration, and sends the sidelink data to the plurality of sidelink logical channels connected to the sidelink radio bearer bearing the sidelink data.

In a possible implementation, the first terminal determines the first configuration, the first configuration includes the sidelink destination address, and the first terminal determines to start the repeat transmission of the sidelink data in a case that an address of the sidelink data matches the sidelink destination address, and sends the sidelink data to the plurality of sidelink logical channels connected to the sidelink radio bearer bearing the sidelink data.

In another possible implementation, the first terminal determines the first configuration, the first configuration includes the specified sending method, and the first terminal determines to start the repeat transmission of the sidelink data in a case that a sending method of the sidelink data matches the specified sending method, and sends the sidelink data to the plurality of sidelink logical channels connected to the sidelink radio bearer bearing the sidelink data.

In yet another possible implementation, the first terminal determines the first configuration, the first configuration includes the specified sending content, and the first terminal determines to start the repeat transmission of the sidelink data in a case that a sending content of the sidelink data matches the specified sending content, and sends the sidelink data to the plurality of sidelink logical channels connected to the sidelink radio bearer bearing the sidelink data.

In a further possible implementation, the first terminal determines the first configuration, the first configuration includes the specified sidelink radio bearer, and the first terminal determines to start the repeat transmission of the sidelink data in a case that a sidelink radio bearer bearing the sidelink data matches the specified sidelink radio bearer, and sends the sidelink data to the plurality of sidelink logical channels connected to the sidelink radio bearer bearing the sidelink data.

In a further possible implementation, the first terminal determines the first configuration, the first configuration includes the quality of service (QoS) requirement of the data, and the first terminal determines to start the repeat transmission of the sidelink data in a case that a QoS requirement of the sidelink data matches the specified quality of service (QoS) requirement, and sends the sidelink data to the plurality of sidelink logical channels connected to the sidelink radio bearer bearing the sidelink data.

It should be noted that, in the above possible implementations, the information included in the first configuration is not limited to the above examples, and may also include a variety of information other than the above examples. The above possible implementations are only for illustration and not for specific limitations on the embodiments of the present disclosure.

It should also be noted that, in the above possible implementations, as an example for illustration, the first terminal determines one set of first configurations. In an embodiment of the present disclosure, the first terminal may also determine a plurality of sets of first configurations. In a case that it is determined that the sidelink data matches at least one set of first configurations of the plurality of sets of first configurations, the repeat transmission of the sidelink data is started and the sidelink data is sent to the plurality of sidelink logical channels connected to the sidelink radio bearer bearing the sidelink data.

In some embodiments, the sidelink logical channel is determined by a sidelink radio link control (RLC) entity.

In an embodiment of the present disclosure, the first terminal sends the sidelink data to the plurality of sidelink logical channels connected to the sidelink radio bearer bearing the sidelink data, and the sidelink logical channel is determined by the sidelink radio link control (RLC) entity.

By implementing the embodiments of the present disclosure, the first terminal determines the first configuration, determines to start the repeat transmission of the sidelink data matching the first configuration, and sends the sidelink data to the plurality of sidelink logical channels connected to the sidelink radio bearer bearing the sidelink data. Therefore, the first terminal in the NR system may be supported to perform the repeat transmission of the sidelink data, so as to improve a communication quality.

It should be noted that, in the embodiments of the present disclosure, steps S31 and S32 may be implemented separately or in combination with any one of other steps in the embodiments of the present disclosure, for example, in combination with steps S21 and S22 in the embodiments of the present disclosure, which is not limited in the embodiments of the present disclosure.

Referring to FIG. 4, FIG. 4 is a flow chart of yet another method for data transmission provided by an embodiment of the present disclosure.

As shown in FIG. 4, the method is performed by a first terminal and applied to an NR sidelink data repeat transmission. The method may include, but is not limited to, the following steps.

In step S41, a first configuration is determined. The first configuration has an association relationship with a number of sidelink logical channels available for sending.

A method for the first terminal to determine the first configuration may refer to the relevant descriptions in the above embodiments, which will not be repeated here.

In an embodiment of the present disclosure, the first terminal determines the first configuration, and the first configuration has the association relationship with the number of the sidelink logical channels available for sending.

For example, the first configuration includes the specified quality of service (QoS) requirement of the data, and the specified quality of service (QoS) requirement of the data may be indicated by the 5QI. The number of the sidelink logical channels is 2 in a case that the 5QI is 1, and the number of the sidelink logical channels is 3 in a case that the 5QI is 2. Sidelink data with the 5QI of 1 is sent using 2 sidelink logical channels, and sidelink data with the 5QI of 2 is sent using 3 sidelink logical channels.

In step S42, a specified number of the sidelink logical channels is determined according to the first configuration; and it is determined to start a repeat transmission of sidelink data matching the first configuration, and the sidelink data is transmitted to the specified number of sidelink logical channels connected to a sidelink radio bearer of the sidelink data.

In an embodiment of the present disclosure, the first configuration has the association relationship with the number of the sidelink logical channels available for sending. The first terminal may determine the specified number of the sidelink logical channels according to the first configuration and the association relationship, then determines to start the repeat transmission of the sidelink data matching the first configuration, and transmits the sidelink data to the specified number of sidelink logical channels connected to the sidelink radio bearer of the sidelink data.

For example, the first configuration includes the specified quality of service (QoS) requirement of the data, which may be indicated by the 5QI. The first configuration has the association relationship with the number of the sidelink logical channels available for sending. The number of the sidelink logical channels is 2, in a case that the 5QI indicates to be 1. In an embodiment of the present disclosure, the first terminal may determine that the number of the sidelink logical channels is 2 according to the specified quality of service (QoS) requirement and the association relationship, then determines to start the repeat transmission of the sidelink data matching the first configuration, and transmits the sidelink data to 2 sidelink logical channels connected to the sidelink radio bearer of the sidelink data.

It should be noted that the information included in the first configuration may also be other information other than the specified quality of service (QoS) requirement of the data, and the other information may have an association relationship with the number of the sidelink logical channels available for sending. The above examples are only for illustration and are not intended to be specific limitations on the embodiments of the present disclosure.

By implementing the embodiments of the present disclosure, the first terminal determines the first configuration, and the first configuration has the association relationship with the number of the sidelink logical channels available for sending. The first terminal determines the specified number of the sidelink logical channels according to the first configuration, determines to start the repeat transmission of the sidelink data matching the first configuration, and transmits the sidelink data to the specified number of sidelink logical channels connected to the sidelink radio bearer of the sidelink data. Therefore, the first terminal in the NR system may be supported to perform the repeat transmission of the sidelink data, so as to improve a communication quality.

It should be noted that, in the embodiments of the present disclosure, steps S41 and S42 may be implemented separately or in combination with any one of other steps in the embodiments of the present disclosure, for example, in combination with steps S21 and S22 and/or steps S31 and S32 in the embodiments of the present disclosure, which is not limited in the embodiments of the present disclosure.

Referring to FIG. 5, FIG. 5 is a flow chart of a further method for data transmission provided by an embodiment of the present disclosure.

As shown in FIG. 5, the method is performed by a first terminal and applied to an NR sidelink data repeat transmission. The method may include, but is not limited to, the following steps.

In step S51, a second configuration is determined. The second configuration includes one or more sending resources available for transmitting.

In an embodiment of the present disclosure, the first terminal determines the second configuration, and the second configuration may instruct the first terminal to determine whether to perform a repeat transmission of sidelink data and/or how to perform a repeat transmission of sidelink data.

The first terminal may determine the second configuration according to a protocol agreement, or may also determine the second configuration according to an instruction of a network device, or may also determine the second configuration according to an instruction of a second terminal.

In an embodiment of the present disclosure, the first terminal determines one or more sets of second configurations, and the second configuration includes the one or more sending resources available for transmitting. The sending resource is used to send the sidelink data.

In some embodiments, the sending resource is a sidelink sending frequency or a sidelink sending resource pool.

In an embodiment of the present disclosure, the first terminal determines the one or more sets of second configurations, and the second configuration includes the one or more sending resources available for transmitting. The second configuration includes one or more sidelink sending frequencies available for transmitting, or the second configuration includes one or more sidelink sending resource pools available for transmitting.

In step S52, the sidelink data for the repeat transmission is sent using the sending resource.

In an embodiment of the present disclosure, the first terminal determines the one or more sets of second configurations, the second configuration includes the one or more sending resources available for transmitting, and the first terminal sends the sidelink data for the repeat transmission using the sending resource.

For example, the second configuration includes two sending resources, and the first terminal uses the two sending resources to send same sidelink data to perform the repeat transmission of the sidelink data.

For example, the first terminal determines two sets of second configurations, one set of second configurations includes two sending resources, and the other set of second configurations includes four sending resources. The first terminal uses six sending resources to send same sidelink data to perform the repeat transmission of the sidelink data.

In some embodiments, the first terminal sending the sidelink data for the repeat transmission using the sending resource includes: sending the sidelink data from the same sidelink radio bearer using different sending resources.

In an embodiment of the present disclosure, the first terminal sends the sidelink data from the same sidelink radio bearer using different sending resources.

For example, the second configuration includes two sending resources, and the first terminal uses the two sending resources to send the sidelink data from the same sidelink radio bearer to perform the repeat transmission of the sidelink data.

For example, the first terminal determines two sets of second configurations, one set of second configurations includes two sending resources, and the other set of second configurations includes four sending resources. The first terminal uses six sending resources to send the sidelink data from the same sidelink radio bearer to perform the repeat transmission of the sidelink data.

By implementing the embodiments of the present disclosure, the first terminal determines the second configuration, in which the second configuration includes the one or more sending resources available for transmitting; and sends the sidelink data for the repeat transmission using the sending resource. Therefore, the first terminal in the NR system may be supported to perform the repeat transmission of the sidelink data, so as to improve a communication quality.

It should be noted that, in the embodiments of the present disclosure, steps S51 and S52 may be implemented separately or in combination with any one of other steps in the embodiments of the present disclosure, for example, in combination with steps S21 and S22 and/or steps S31 and S32 and/or steps S41 and S42 in the embodiments of the present disclosure, which is not limited in the embodiments of the present disclosure.

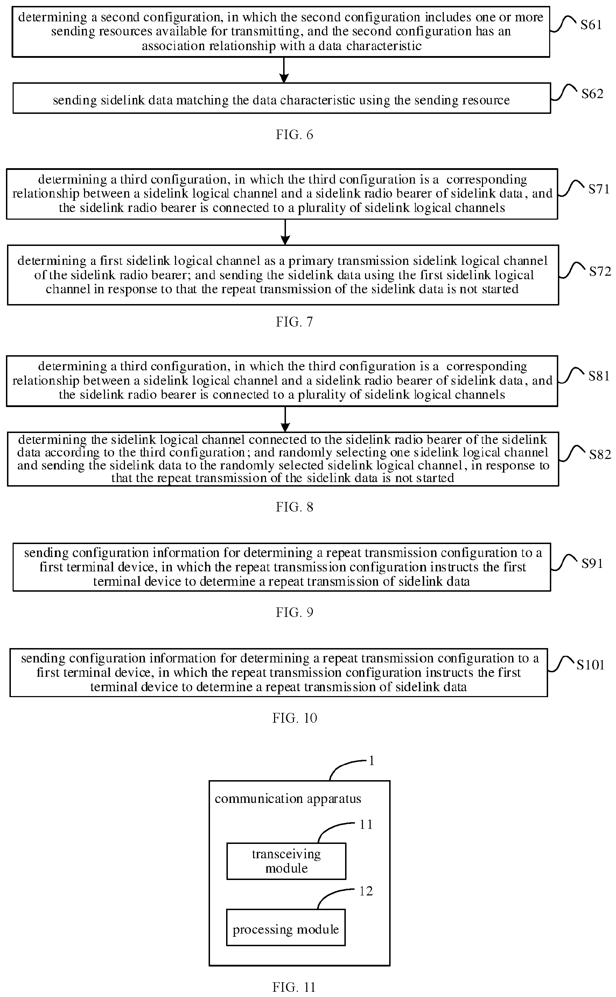

Referring to FIG. 6, FIG. 6 is a flow chart of a further method for data transmission provided by an embodiment of the present disclosure.

As shown in FIG. 6, the method is performed by a first terminal and applied to an NR sidelink data repeat transmission. The method may include, but is not limited to, the following steps.

In step S61, a second configuration is determined. The second configuration includes one or more sending resources available for transmitting, and the second configuration has an association relationship with a data characteristic.

A method for the first terminal to determine the second configuration may refer to the relevant descriptions in the above embodiments, which will not be repeated here.

The sending resource included in the second configuration may refer to the relevant descriptions in the above embodiments, which will not be repeated here.

In an embodiment of the present disclosure, the first terminal determines the repeat transmission configuration, the repeat transmission configuration includes the one or more sets of second configurations, and the second configuration has the association relationship with the data characteristic.

In some embodiments, the data characteristic includes at least one of: a QoS requirement of data; a sending method of data; a sidelink logical channel where data is located; or a sidelink radio bearer where data is located.

The data characteristic includes the QoS requirement of the data, the data characteristic includes the sending method of the data, the data characteristic includes the sidelink logical channel where the data is located, and the data characteristic includes the sidelink radio bearer where the data is located.

In step S62, sidelink data matching the data characteristic is sent using the sending resource.

In an embodiment of the present disclosure, the repeat transmission configuration includes the one or more sets of second configurations. The first terminal determines the repeat transmission configuration and determines the second configuration. The second configuration includes the one or more sending resources available for transmitting. The second configuration has the association relationship with the data characteristic. The repeat transmission of the sidelink data is determined according to the repeat transmission configuration. It may be determined to send the sidelink data matching the data characteristic using the sending resource.

For example, the data characteristic is the QoS requirement of the data. The first terminal may determine sidelink data matching the QoS requirement of the data, determines the one or more sending resources according to the second configuration, and sends the sidelink data matching the data characteristic using the sending resource.

It should be noted that the data characteristic may also be the sending method of the data, the sidelink logical channel where the data is located, the sidelink radio bearer where the data is located, etc. The above examples are only for illustration and are not intended to be specific limitations on the embodiments of the present disclosure.

By implementing the embodiments of the present disclosure, the first terminal determines the second configuration, in which the second configuration includes the one or more sending resources available for transmitting and the second configuration has the association relationship with the data characteristic; and sends the sidelink data matching the data characteristic using the sending resource. Therefore, the first terminal in the NR system may be supported to perform the repeat transmission of the sidelink data, so as to improve a communication quality.

It should be noted that, in the embodiments of the present disclosure, steps S61 and S62 may be implemented separately or in combination with any one of other steps in the embodiments of the present disclosure, for example, in combination with steps S21 and S22 and/or steps S31 and S32 and/or steps S41 and S42 and/or steps S51 and S52 in the embodiments of the present disclosure, which is not limited in the embodiments of the present disclosure.

Referring to FIG. 7, FIG. 7 is a flow chart of a further method for data transmission provided by an embodiment of the present disclosure.

As shown in FIG. 7, the method is performed by a first terminal and applied to an NR sidelink data repeat transmission. The method may include, but is not limited to, the following steps.

In step S71, a third configuration is determined. The third configuration is a corresponding relationship between a sidelink logical channel and a sidelink radio bearer of sidelink data, and the sidelink radio bearer is connected to a plurality of sidelink logical channels.

In an embodiment of the present disclosure, the first terminal determines the third configuration, and the third configuration may instruct the first terminal to determine whether to perform a repeat transmission of the sidelink data and/or how to perform a repeat transmission of the sidelink data.

The first terminal may determine the third configuration according to a protocol agreement, or may also determine the third configuration according to an instruction of a network device, or may also determine the third configuration according to an instruction of a second terminal.

In an embodiment of the present disclosure, the first terminal determines the repeat transmission configuration and determines the third configuration. The third configuration is the corresponding relationship between the sidelink logical channel and the sidelink radio bearer of the sidelink data, and the sidelink radio bearer is connected to the plurality of sidelink logical channels.

In step S72, a first sidelink logical channel is determined as a primary transmission sidelink logical channel of the sidelink radio bearer; and the sidelink data is sent using the first sidelink logical channel in response to that the repeat transmission of the sidelink data is not started.

In an embodiment of the present disclosure, the first terminal determines the repeat transmission configuration, the repeat transmission configuration includes the third configuration, the third configuration is the corresponding relationship between the sidelink logical channel and the sidelink radio bearer of the sidelink data, and the sidelink radio bearer is connected to the plurality of sidelink logical channels. The plurality of sidelink logical channels are provided to be used to send the sidelink data in a case that the repeat transmission of the sidelink data is not started. Based on this, in an embodiment of the present disclosure, the first terminal determines the first sidelink logical channel as the primary transmission sidelink logical channel of the sidelink radio bearer, and sends the sidelink data using the first sidelink logical channel in a case that the repeat transmission of the sidelink data is not started.

The first terminal determines that the repeat transmission of the sidelink data is not started, which may be that the first terminal does not confirm the repeat transmission configuration, or may also be that the first terminal determines that the sidelink data does not match the first configuration and does not start the repeat transmission, and so on.

In an embodiment of the present disclosure, the first terminal determines the first sidelink logical channel as the primary transmission sidelink logical channel of the sidelink radio bearer, and the first sidelink logical channel is one of the plurality of sidelink logical channels connected to the sidelink radio bearer bearing the sidelink data. The first terminal may pre-determine one of the sidelink logical channels as the first sidelink logical channel, and determines the first sidelink logical channel as the primary transmission sidelink logical channel of the sidelink radio bearer.

By implementing the embodiments of the present disclosure, the first terminal determines the third configuration, in which the third configuration is the corresponding relationship between the sidelink logical channel and the sidelink radio bearer of the sidelink data, and the sidelink radio bearer is connected to the plurality of sidelink logical channels; determines the first sidelink logical channel as the primary transmission sidelink logical channel of the sidelink radio bearer; and sends the sidelink data using the first sidelink logical channel in response to that the repeat transmission of the sidelink data is not started. Therefore, the first terminal in the NR system may be supported to perform the repeat transmission of the sidelink data, so as to improve a communication quality.

It should be noted that, in the embodiments of the present disclosure, steps S71 and S72 may be implemented separately or in combination with any one of other steps in the embodiments of the present disclosure, for example, in combination with steps S21 and S22 and/or steps S31 and S32 and/or steps S41 and S42 and/or steps S51 and S52 and/or steps S61 and S62 in the embodiments of the present disclosure, which is not limited in the embodiments of the present disclosure.

Referring to FIG. 8, FIG. 8 is a flow chart of a further method for data transmission provided by an embodiment of the present disclosure.

As shown in FIG. 8, the method is performed by a first terminal and applied to an NR sidelink data repeat transmission. The method may include, but is not limited to, the following steps.

In step S81, a third configuration is determined. The third configuration is a corresponding relationship between a sidelink logical channel and a sidelink radio bearer of sidelink data, and the sidelink radio bearer is connected to a plurality of sidelink logical channels.

A method for the first terminal to determine the third configuration may refer to the relevant descriptions in the above embodiments, which will not be repeated here.

In steps S82, the sidelink logical channel connected to the sidelink radio bearer of the sidelink data is determined according to the third configuration; and one sidelink logical channel is randomly selected and the sidelink data is sent to the randomly selected sidelink logical channel, in response to that the repeat transmission of the sidelink data is not started.

In an embodiment of the present disclosure, the first terminal determines the repeat transmission configuration, the repeat transmission configuration includes the third configuration, the third configuration is the corresponding relationship between the sidelink logical channel and the sidelink radio bearer of the sidelink data, and the sidelink radio bearer is connected to the plurality of sidelink logical channels. The first terminal determines the sidelink logical channel connected to the sidelink radio bearer of the sidelink data according to the third configuration. The plurality of sidelink logical channels are provided to be used to send the sidelink data in a case that the repeat transmission of the sidelink data is not started. Based on this, in an embodiment of the present disclosure, the first terminal randomly selects one sidelink logical channel and sends the sidelink data to the randomly selected sidelink logical channel, in a case that the repeat transmission of the sidelink data is not started.

The first terminal determines that the repeat transmission of the sidelink data is not started, which may be that the first terminal does not confirm the repeat transmission configuration, or may also be that the first terminal determines that the sidelink data does not match the first configuration and does not start the repeat transmission, and so on.

By implementing the embodiments of the present disclosure, the first terminal determines the third configuration, in which the third configuration is the corresponding relationship between the sidelink logical channel and the sidelink radio bearer of the sidelink data, and the sidelink radio bearer is connected to the plurality of sidelink logical channels; determines the sidelink logical channel connected to the sidelink radio bearer of the sidelink data according to the third configuration; and randomly selects one sidelink logical channel and sends the sidelink data to the randomly selected sidelink logical channel, in response to that the repeat transmission of the sidelink data is not started. Therefore, the first terminal in the NR system may be supported to perform the repeat transmission of the sidelink data, so as to improve a communication quality.

It should be noted that, in the embodiments of the present disclosure, steps S81 and S82 may be implemented separately or in combination with any one of other steps in embodiments of the present disclosure, for example, in combination with steps S21 and S22 and/or steps S31 and S32 and/or steps S41 and S42 and/or steps S51 and S52 and/or steps S61 and S62 and/or steps S71 and S72 in the embodiments of the present disclosure, which is not limited in the embodiments of the present disclosure.

Referring to FIG. 9, FIG. 9 is a flow chart of a further method for data transmission provided by an embodiment of the present disclosure.

As shown in FIG. 9, the method is performed by a network device and applied to an NR sidelink data repeat transmission. The method may include, but is not limited to, a following step.

In step S91, configuration information for determining a repeat transmission configuration is sent to a first terminal. The repeat transmission configuration instructs the first terminal to determine a repeat transmission of sidelink data.

In an embodiment of the present disclosure, the network device sends the configuration information for determining the repeat transmission configuration to the first terminal, so that after the first terminal receives the configuration information sent by the network device, the first terminal may determine the repeat transmission configuration to determine the repeat transmission of the sidelink data according to the repeat transmission configuration.

In an LTE system, the network device may send the configuration information to the first terminal, indicating the repeat transmission configuration. The repeat transmission configuration carries a reliability threshold. In a case that a reliability indicator (ProSe Per Packet Reliability, PPPR) of the sidelink data in a sidelink radio bearer, i.e., a packet data convergence protocol (PDCP) entity, of the first terminal is lower than the reliability threshold, the repeat transmission is started to send the sidelink data of the sidelink radio bearer, i.e., the PDCP entity, to two or more sidelink radio link control (RLC) entities, i.e., sidelink logical channels. The first terminal sends sidelink data of the sidelink logical channels connected to the same PDCP entity via different sidelink frequencies.

In an NR system, the sidelink data no longer provides the reliability indicator (PPPR), so an LTE control method cannot be reused, and the first terminal may no longer control the repeat transmission according to the reliability threshold carried in the repeat transmission configuration. For the first terminal in the NR system, the network device may send the configuration information to the first terminal to indicate the repeat transmission configuration. The repeat transmission configuration may include other information, such as: a sidelink destination address. It is determined to perform the repeat transmission of the sidelink data in a case that an address to which the sidelink data is sent is consistent with the sidelink destination address. The sidelink data of the sidelink radio bearer may be sent to two or more sidelink logical channels.

Of course, for the first terminal in the NR system, information included in the repeat transmission configuration is not limited to the sidelink destination address, but may also include a specified sending method, a specified sending content, a specified sidelink radio bearer, and so on.

By implementing the embodiments of the present disclosure, the network device sends the configuration information for determining the repeat transmission configuration to the first terminal. The repeat transmission configuration instructs the first terminal to determine the repeat transmission of the sidelink data. Therefore, the first terminal in the NR system may be supported to perform the repeat transmission of the sidelink data, so as to improve a communication quality.

In some embodiments, the repeat transmission configuration includes one or more sets of first configurations, and the first configuration includes at least one of: a sidelink destination address; a specified sending method; a specified sending content; a specified sidelink radio bearer; or a specified quality of service (QoS) requirement of data.

In an embodiment of the present disclosure, the first terminal determines the repeat transmission configuration, the repeat transmission configuration includes the one or more sets of first configurations, and the first terminal determines the repeat transmission of the sidelink data according to the one or more sets of first configurations.

The first configuration includes one or more of the sidelink destination address, the specified sending method, the specified sending content, the sidelink radio bearer, and the quality of service (QoS) requirement of the data. The repeat transmission configuration includes the one or more sets of first configurations, and information included in each set of first configurations may be the same or different in a case that the repeat transmission configuration includes a plurality of sets of first configurations.

For example, the repeat transmission configuration includes two sets of first configurations, one set of first configurations includes the sidelink destination address and the specified sending method, and the other set of first configurations includes the specified sending content and the sidelink radio bearer.

For example, the repeat transmission configuration includes two sets of first configurations, one set of first configurations includes the sidelink destination address and the specified sending method, and the other set of first configurations also includes the sidelink destination address and the specified sending method.

It should be noted that the above examples are for illustration only. Information included in the first configuration may further be one or more of the sidelink destination address, the specified sending method, the specified sending content, the sidelink radio bearer and the quality of service (QoS) requirement of the data. The above examples are not intended to be specific limitations on the embodiments of the present disclosure.

The first configuration includes the specified sending method, and the specified sending method may be a unicast, a multicast, or a broadcast, etc.

The first configuration includes the specified sending content, and the specified sending content may be a discovery signal, a communication signal, a relay discovery signal, a relay communication signal or a non-relay discovery signal, etc.

The first configuration includes the specified sidelink radio bearer, and the specified sidelink radio bearer may be identified by SLRB-Uu-ConfigIndex.

The first configuration includes the specified QoS requirement of the data, and the specified QoS requirement of the data may be indicated by a 5G QoS identifier (5QI) or a sending file (tx profile).

In an embodiment of the present disclosure, the repeat transmission configuration includes the one or more sets of first configurations. The first terminal determines the repeat transmission configuration, determines the first configuration, and determines the repeat transmission of the sidelink data according to the repeat transmission configuration. The first terminal may determine to start a repeat transmission of sidelink data matching the first configuration, and send the sidelink data to a plurality of sidelink logical channels connected to a sidelink radio bearer bearing the sidelink data.

In a possible implementation, the first terminal determines the first configuration, the first configuration includes the sidelink destination address, and the first terminal determines to start the repeat transmission of the sidelink data in a case that an address of the sidelink data matches the sidelink destination address, and sends the sidelink data to the plurality of sidelink logical channels connected to the sidelink radio bearer bearing the sidelink data.

In another possible implementation, the first terminal determines the first configuration, the first configuration includes the specified sending method, and the first terminal determine to start the repeat transmission of the sidelink data in a case that a sending method of the sidelink data matches the specified sending method, and sends the sidelink data to the plurality of sidelink logical channels connected to the sidelink radio bearer bearing the sidelink data.

In yet another possible implementation, the first terminal determines the first configuration, the first configuration includes the specified sending content, and the first terminal determines to start the repeat transmission of the sidelink data in a case that a sending content of the sidelink data matches the specified sending content, and sends the sidelink data to the plurality of sidelink logical channels connected to the sidelink radio bearer bearing the sidelink data.

In a further possible implementation, the first terminal determines the first configuration, the first configuration includes the specified sidelink radio bearer, and the first terminal determines to start the repeat transmission of the sidelink data in a case that a sidelink radio bearer bearing the sidelink data matches the specified sidelink radio bearer, and sends the sidelink data to the plurality of sidelink logical channels connected to the sidelink radio bearer bearing the sidelink data.

In a further possible implementation, the first terminal determines the first configuration, the first configuration includes the quality of service (QoS) requirement of the data, and the first terminal determines to start the repeat transmission of the sidelink data in a case that a QoS requirement of the sidelink data matches the specified quality of service (QoS) requirement, and sends the sidelink data to the plurality of sidelink logical channels connected to the sidelink radio bearer bearing the sidelink data.

It should be noted that, in the above possible implementations, the information included in the first configuration is not limited to the above examples, and may also include a variety of information other than the above examples. The above possible implementations are only for illustration and not for specific limitations on the embodiments of the present disclosure.

It should also be noted that, in the above possible implementations, as an example for illustration, the first terminal determines one set of first configurations. In an embodiment of the present disclosure, the first terminal may also determine a plurality of sets of first configurations. In a case that it is determined that the sidelink data matches at least one set of first configurations of the plurality of sets of first configurations, the repeat transmission of the sidelink data is started and the sidelink data is sent to the plurality of sidelink logical channels connected to the sidelink radio bearer bearing the sidelink data.

In some embodiments, the sidelink logical channel is determined by a sidelink radio link control (RLC) entity.

In an embodiment of the present disclosure, the first terminal sends the sidelink data to the plurality of sidelink logical channels connected to the sidelink radio bearer bearing the sidelink data, and the sidelink logical channel is determined by the sidelink radio link control (RLC) entity.

In some embodiments, the first configuration has an association relationship with a number of sidelink logical channels available for sending.

In an embodiment of the present disclosure, the repeat transmission configuration includes the first configuration, and the first configuration has the association relationship with the number of the sidelink logical channels available for sending.

For example, the first configuration includes the specified quality of service (QoS) requirement of the data, and the specified quality of service (QoS) requirement of the data may be indicated by the 5QI. The number of the sidelink logical channels is 2 in a case that the 5QI is 1, and the number of the sidelink logical channels is 3 in a case that the 5QI is 2. Sidelink data with the 5QI of 1 is sent using 2 sidelink logical channels, and sidelink data with the 5QI of 2 is sent using 3 sidelink logical channels.

In an embodiment of the present disclosure, the first configuration has the association relationship with the number of the sidelink logical channels available for sending. The first terminal may determine the specified number of the sidelink logical channels according to the first configuration and the association relationship, then determines to start the repeat transmission of the sidelink data matching the first configuration, and transmits the sidelink data to the specified number of sidelink logical channels connected to the sidelink radio bearer of the sidelink data.

For example, the first configuration includes the specified quality of service (QoS) requirement of the data, which may be indicated by the 5QI. The first configuration has the association relationship with the number of the sidelink logical channels available for sending. The number of the sidelink logical channels is 2 in a case that the 5QI indicates to be 1. In an embodiment of the present disclosure, the first terminal may determine that the number of the sidelink logical channels is 2 according to the specified quality of service (QoS) requirement and the association relationship, then determines to start the repeat transmission of the sidelink data matching the first configuration, and transmits the sidelink data to 2 sidelink logical channels connected to the sidelink radio bearer of the sidelink data.

It should be noted that the information included in the first configuration may also be other information other than the specified quality of service (QoS) requirement of the data, and the other information may have an association relationship with the number of the sidelink logical channels available for sending. The above examples are only for illustration and are not intended to be specific limitations on the embodiments of the present disclosure.

In some embodiments, the repeat transmission configuration includes one or more sets of second configurations, and the second configuration includes one or more sending resources available for transmitting.

In an embodiment of the present disclosure, the first terminal determines the repeat transmission configuration, the repeat transmission configuration includes the one or more sets of second configurations, and the second configuration includes the one or more sending resources available for transmitting. The sending resource is used to send the sidelink data.

In some embodiments, the sending resource is a sidelink sending frequency or a sidelink sending resource pool.

In an embodiment of the present disclosure, the first terminal determines the repeat transmission configuration, the repeat transmission configuration includes the one or more sets of second configurations, and the second configuration includes the one or more sending resources available for transmitting. The second configuration includes one or more sidelink sending frequencies available for transmitting, or the second configuration includes one or more sidelink sending resource pools available for transmitting.

In an embodiment of the present disclosure, the first terminal determines the repeat transmission configuration, the repeat transmission configuration includes the one or more sets of second configurations, the second configuration includes the one or more sending resources available for transmitting, and the first terminal sends the sidelink data for the repeat transmission using the sending resource.

For example, the second configuration includes two sending resources, and the first terminal uses the two sending resources to send same sidelink data to perform the repeat transmission of the sidelink data.

For example, the repeat transmission configuration includes two sets of second configurations, one set of second configurations includes two sending resources, and the other set of second configurations includes four sending resources. The first terminal uses six sending resources to send same sidelink data to perform the repeat transmission of the sidelink data.

In an embodiment of the present disclosure, the first terminal sends the sidelink data from the same sidelink radio bearer using different sending resources.

For example, the second configuration includes two sending resources, and the first terminal uses the two sending resources to send the sidelink data from the same sidelink radio bearer to perform the repeat transmission of the sidelink data.

For example, the repeat transmission configuration includes two sets of second configurations, one set of second configurations includes two sending resources, and the other set of second configurations includes four sending resources. The first terminal uses six sending resources to send the sidelink data from the same sidelink radio bearer to perform the repeat transmission of the sidelink data.

In some embodiments, the second configuration has an association relationship with a data characteristic.

In an embodiment of the present disclosure, the first terminal determines the repeat transmission configuration, the repeat transmission configuration includes the one or more sets of second configurations, and the second configuration has the association relationship with the data characteristic.

In some embodiments, the data characteristic includes at least one of: a QoS requirement of data; a sending method of data; a sidelink logical channel where data is located; or a sidelink radio bearer where data is located.

The data characteristic includes the QoS requirement of the data, the data characteristic includes the sending method of the data, the data characteristic includes the sidelink logical channel where the data is located, and the data characteristic includes the sidelink radio bearer where the data is located.

In some embodiments, the first terminal sends sidelink data matching the data characteristic using the sending resource.

In an embodiment of the present disclosure, the repeat transmission configuration includes the one or more sets of second configurations. The first terminal determines the repeat transmission configuration and determines the second configuration. The second configuration includes the one or more sending resources available for transmitting. The second configuration has the association relationship with the data characteristic. The repeat transmission of the sidelink data is determined according to the repeat transmission configuration. It may be determined to send the sidelink data matching the data characteristic using the sending resource.

For example, the data characteristic is the QoS requirement of the data. The first terminal may determine sidelink data matching the QoS requirement of the data, determines the one or more sending resources according to the second configuration, and sends the sidelink data matching the data characteristic using the sending resource.

It should be noted that the data characteristic may also be the sending method of the data, the sidelink logical channel where the data is located, the sidelink radio bearer where the data is located, etc. The above examples are only for illustration and are not intended to be specific limitations on the embodiments of the present disclosure.

In some embodiments, the repeat transmission configuration includes a third configuration, the third configuration is a corresponding relationship between a sidelink logical channel and a sidelink radio bearer of the sidelink data, and the sidelink radio bearer is connected to a plurality of sidelink logical channels.

In an embodiment of the present disclosure, the first terminal determines the repeat transmission configuration and determines the third configuration. The third configuration is the corresponding relationship between the sidelink logical channel and the sidelink radio bearer of the sidelink data, and the sidelink radio bearer is connected to the plurality of sidelink logical channels.

In some embodiments, the first terminal determining the repeat transmission of the sidelink data according to the repeat transmission configuration includes: the first terminal determining a first sidelink logical channel as a primary transmission sidelink logical channel of the sidelink radio bearer; and sending the sidelink data using the first sidelink logical channel in response to that the repeat transmission of the sidelink data is not started.

In an embodiment of the present disclosure, the first terminal determines the repeat transmission configuration, the repeat transmission configuration includes the third configuration, the third configuration is the corresponding relationship between the sidelink logical channel and the sidelink radio bearer of the sidelink data, and the sidelink radio bearer is connected to the plurality of sidelink logical channels. The plurality of sidelink logical channels are provided to be used to send the sidelink data in a case that the repeat transmission of the sidelink data is not started. Based on this, in an embodiment of the present disclosure, the first terminal determines the first sidelink logical channel as the primary transmission sidelink logical channel of the sidelink radio bearer, and sends the sidelink data using the first sidelink logical channel in a case that the repeat transmission of the sidelink data is not started.

The first terminal determines that the repeat transmission of the sidelink data is not started, which may be that the first terminal does not confirm the repeat transmission configuration, or may also be that the first terminal determines that the sidelink data does not match the first configuration and does not start the repeat transmission, and so on.

In an embodiment of the present disclosure, the first terminal determines the first sidelink logical channel as the primary transmission sidelink logical channel of the sidelink radio bearer, and the first sidelink logical channel is one of the plurality of sidelink logical channels connected to the sidelink radio bearer bearing the sidelink data. The first terminal may pre-determine one of the sidelink logical channels as the first sidelink logical channel, and determines the first sidelink logical channel as the primary transmission sidelink logical channel of the sidelink radio bearer.

In some embodiments, the first terminal determining the repeat transmission of the sidelink data according to the repeat transmission configuration includes: the first terminal determining the sidelink logical channel connected to the sidelink radio bearer of the sidelink data according to the third configuration; and randomly selecting one sidelink logical channel and sending the sidelink data to the randomly selected sidelink logical channel, in response to that the repeat transmission of the sidelink data is not started.

In an embodiment of the present disclosure, the first terminal determines the repeat transmission configuration, the repeat transmission configuration includes the third configuration, the third configuration is the corresponding relationship between the sidelink logical channel and the sidelink radio bearer of the sidelink data, and the sidelink radio bearer is connected to the plurality of sidelink logical channels. The first terminal determines the sidelink logical channel connected to the sidelink radio bearer of the sidelink data according to the third configuration. The plurality of sidelink logical channels are provided to be used to send the sidelink data in a case that the repeat transmission of the sidelink data is not started. Based on this, in an embodiment of the present disclosure, the first terminal randomly selects one sidelink logical channel and sends the sidelink data to the randomly selected sidelink logical channel, in a case that the repeat transmission of the sidelink data is not started.

The first terminal determines that the repeat transmission of the sidelink data is not started, which may be that the first terminal does not confirm the repeat transmission configuration, or may also be that the first terminal determines that the sidelink data does not match the first configuration and does not start the repeat transmission, and so on.

The first configuration, the second configuration, and the third configuration may be implemented separately or in any combination.

Referring to FIG. 10, FIG. 10 is a flow chart of a further method for data transmission provided by an embodiment of the present disclosure.

As shown in FIG. 10, the method is performed by a second terminal and applied to an NR sidelink data repeat transmission. The method may include, but is not limited to, a following step.

In step S101, configuration information for determining a repeat transmission configuration is sent to a first terminal. The repeat transmission configuration instructs the first terminal to determine a repeat transmission of sidelink data.

In an embodiment of the present disclosure, the second terminal sends the configuration information for determining the repeat transmission configuration to the first terminal, so that after the first terminal receives the configuration information sent by the second terminal, the first terminal may determine the repeat transmission configuration to determine the repeat transmission of the sidelink data according to the repeat transmission configuration.

In an LTE system, the second terminal may send the configuration information to the first terminal, indicating the repeat transmission configuration. The repeat transmission configuration carries a reliability threshold. In a case that a reliability indicator (ProSe Per Packet Reliability, PPPR) of the sidelink data in a sidelink radio bearer, i.e., a packet data convergence protocol (PDCP) entity, of the first terminal is lower than the reliability threshold, the repeat transmission is started to send the sidelink data of the sidelink radio bearer, i.e., the PDCP entity, to two or more sidelink radio link control (RLC) entities, i.e., sidelink logical channels. The first terminal sends sidelink data of the sidelink logical channels connected to the same PDCP entity via different sidelink frequencies.

In an NR system, the sidelink data no longer provides the reliability indicator (PPPR), so an LTE control method cannot be reused, and the first terminal may no longer control the repeat transmission according to the reliability threshold carried in the repeat transmission configuration. For the first terminal in the NR system, the second terminal may send the configuration information to the first terminal to indicate the repeat transmission configuration. The repeat transmission configuration may include other information, such as: a sidelink destination address. It is determined to perform the repeat transmission of the sidelink data in a case that an address to which the sidelink data is sent is consistent with the sidelink destination address. The sidelink data of the sidelink radio bearer may be sent to two or more sidelink logical channels.

Of course, for the first terminal in the NR system, information included in the repeat transmission configuration is not limited to the sidelink destination address, but may also include a specified sending method, a specified sending content, a specified sidelink radio bearer, and so on.

By implementing the embodiments of the present disclosure, the second terminal sends the configuration information for determining the repeat transmission configuration to the first terminal. The repeat transmission configuration instructs the first terminal to determine the repeat transmission of the sidelink data. Therefore, the first terminal in the NR system may be supported to perform the repeat transmission of the sidelink data, so as to improve a communication quality.

In some embodiments, the repeat transmission configuration includes one or more sets of first configurations, and the first configuration includes at least one of: a sidelink destination address; a specified sending method; a specified sending content; a specified sidelink radio bearer; or a specified quality of service (QoS) requirement of data.

In an embodiment of the present disclosure, the first terminal determines the repeat transmission configuration, the repeat transmission configuration includes the one or more sets of first configurations, and the first terminal determines the repeat transmission of the sidelink data according to the one or more sets of first configurations.

The first configuration includes one or more of the sidelink destination address, the specified sending method, the specified sending content, the sidelink radio bearer, and the quality of service (QoS) requirement of the data. The repeat transmission configuration includes the one or more sets of first configurations, and information included in each set of first configurations may be the same or different in a case that the repeat transmission configuration includes a plurality of sets of first configurations.

For example, the repeat transmission configuration includes two sets of first configurations, one set of first configurations includes the sidelink destination address and the specified sending method, and the other set of first configurations includes the specified sending content and the sidelink radio bearer.

For example, the repeat transmission configuration includes two sets of first configurations, one set of first configurations includes the sidelink destination address and the specified sending method, and the other set of first configurations also includes the sidelink destination address and the specified sending method.

It should be noted that the above examples are for illustration only. Information included in the first configuration may further be one or more of the sidelink destination address, the specified sending method, the specified sending content, the sidelink radio bearer and the quality of service (QoS) requirement of the data. The above examples are not intended to be specific limitations on the embodiments of the present disclosure.

The first configuration includes the specified sending method, and the specified sending method may be a unicast, a multicast, or a broadcast, etc.

The first configuration includes the specified sending content, and the specified sending content may be a discovery signal, a communication signal, a relay discovery signal, a relay communication signal or a non-relay discovery signal, etc.

The first configuration includes the specified sidelink radio bearer, and the specified sidelink radio bearer may be identified by SLRB-Uu-ConfigIndex.

The first configuration includes the specified QoS requirement of the data, and the specified QoS requirement of the data may be indicated by a 5G QoS identifier (5QI) or a sending file (tx profile).

In an embodiment of the present disclosure, the repeat transmission configuration includes the one or more sets of first configurations. The first terminal determines the repeat transmission configuration, determines the first configuration, and determines the repeat transmission of the sidelink data according to the repeat transmission configuration. The first terminal may determine to start a repeat transmission of sidelink data matching the first configuration, and sends the sidelink data to a plurality of sidelink logical channels connected to a sidelink radio bearer bearing the sidelink data.

In a possible implementation, the first terminal determines the first configuration, the first configuration includes the sidelink destination address, and the first terminal determines to start the repeat transmission of the sidelink data in a case that an address of the sidelink data matches the sidelink destination address, and sends the sidelink data to the plurality of sidelink logical channels connected to the sidelink radio bearer bearing the sidelink data.

In another possible implementation, the first terminal determines the first configuration, the first configuration includes the specified sending method, and the first terminal determine to start the repeat transmission of the sidelink data in a case that a sending method of the sidelink data matches the specified sending method, and sends the sidelink data to the plurality of sidelink logical channels connected to the sidelink radio bearer bearing the sidelink data.

In yet another possible implementation, the first terminal determines the first configuration, the first configuration includes the specified sending content, and the first terminal determine to start the repeat transmission of the sidelink data in a case that a sending content of the sidelink data matches the specified sending content, and sends the sidelink data to the plurality of sidelink logical channels connected to the sidelink radio bearer bearing the sidelink data.

In a further possible implementation, the first terminal determines the first configuration, the first configuration includes the specified sidelink radio bearer, and the first terminal determines to start the repeat transmission of the sidelink data in a case that a sidelink radio bearer bearing the sidelink data matches the specified sidelink radio bearer, and sends the sidelink data to the plurality of sidelink logical channels connected to the sidelink radio bearer bearing the sidelink data.

In a further possible implementation, the first terminal determines the first configuration, the first configuration includes the quality of service (QoS) requirement of the data, and the first terminal determines to start the repeat transmission of the sidelink data in a case that a QoS requirement of the sidelink data matches the specified quality of service (QoS) requirement, and sends the sidelink data to the plurality of sidelink logical channels connected to the sidelink radio bearer bearing the sidelink data.

It should be noted that, in the above possible implementations, the information included in the first configuration is not limited to the above examples, and may also include a variety of information other than the above examples. The above possible implementations are only for illustration and not for specific limitations on the embodiments of the present disclosure.

It should also be noted that, in the above possible implementations, as an example for illustration, the first terminal determines one set of first configurations. In an embodiment of the present disclosure, the first terminal may also determine a plurality of sets of first configurations. In a case that it is determined that the sidelink data matches at least one set of first configurations of the plurality of sets of first configurations, the repeat transmission of the sidelink data is started and the sidelink data is sent to the plurality of sidelink logical channels connected to the sidelink radio bearer bearing the sidelink data.

In some embodiments, the sidelink logical channel is determined by a sidelink radio link control (RLC) entity.

In an embodiment of the present disclosure, the first terminal sends the sidelink data to the plurality of sidelink logical channels connected to the sidelink radio bearer bearing the sidelink data, and the sidelink logical channel is determined by the sidelink radio link control (RLC) entity.

In some embodiments, the first configuration has an association relationship with a number of sidelink logical channels available for sending.

In an embodiment of the present disclosure, the repeat transmission configuration includes the first configuration, and the first configuration has the association relationship with the number of the sidelink logical channels available for sending.

For example, the first configuration includes the specified quality of service (QoS) requirement of the data, and the specified quality of service (QoS) requirement of the data may be indicated by the 5QI. The number of the sidelink logical channels is 2 in a case that the 5QI is 1, and the number of the sidelink logical channels is 3 in a case that the 5QI is 2. Sidelink data with the 5QI of 1 is sent using 2 sidelink logical channels, and sidelink data with the 5QI of 2 is sent using 3 sidelink logical channels.

In an embodiment of the present disclosure, the first configuration has the association relationship with the number of the sidelink logical channels available for sending. The first terminal may determine the specified number of the sidelink logical channels according to the first configuration and the association relationship, then determines to start the repeat transmission of the sidelink data matching the first configuration, and transmits the sidelink data to the specified number of sidelink logical channels connected to the sidelink radio bearer of the sidelink data.

For example, the first configuration includes the specified quality of service (QoS) requirement of the data, which may be indicated by the 5QI. The first configuration has the association relationship with the number of the sidelink logical channels available for sending. The number of the sidelink logical channels is 2 in a case that the 5QI indicates to be 1. In an embodiment of the present disclosure, the first terminal may determine that the number of the sidelink logical channels is 2 according to the specified quality of service (QoS) requirement and the association relationship, then determines to start the repeat transmission of the sidelink data matching the first configuration, and transmits the sidelink data to 2 sidelink logical channels connected to the sidelink radio bearer of the sidelink data.

It should be noted that the information included in the first configuration may also be other information other than the specified quality of service (QoS) requirement of the data, and the other information may have an association relationship with the number of the sidelink logical channels available for sending. The above examples are only for illustration and are not intended to be specific limitations on the embodiments of the present disclosure.

In some embodiments, the repeat transmission configuration includes one or more sets of second configurations, and the second configuration includes one or more sending resources available for transmitting.

In an embodiment of the present disclosure, the first terminal determines the repeat transmission configuration, the repeat transmission configuration includes the one or more sets of second configurations, and the second configuration includes the one or more sending resources available for transmitting. The sending resource is used to send the sidelink data.

In some embodiments, the sending resource is a sidelink sending frequency or a sidelink sending resource pool.

In an embodiment of the present disclosure, the first terminal determines the repeat transmission configuration, the repeat transmission configuration includes the one or more sets of second configurations, and the second configuration includes the one or more sending resources available for transmitting. The second configuration includes one or more sidelink sending frequencies available for transmitting, or the second configuration includes one or more sidelink sending resource pools available for transmitting.

In an embodiment of the present disclosure, the first terminal determines the repeat transmission configuration, the repeat transmission configuration includes the one or more sets of second configurations, the second configuration includes the one or more sending resources available for transmitting, and the first terminal sends the sidelink data for the repeat transmission using the sending resource.

For example, the second configuration includes two sending resources, and the first terminal uses the two sending resources to send same sidelink data to perform the repeat transmission of the sidelink data.

For example, the repeat transmission configuration includes two sets of second configurations, one set of second configurations includes two sending resources, and the other set of second configurations includes four sending resources. The first terminal uses six sending resources to send same sidelink data to perform the repeat transmission of the sidelink data.

In an embodiment of the present disclosure, the first terminal sends the sidelink data from the same sidelink radio bearer using different sending resources.

For example, the second configuration includes two sending resources, and the first terminal uses the two sending resources to send the sidelink data from the same sidelink radio bearer to perform the repeat transmission of the sidelink data.

For example, the repeat transmission configuration includes two sets of second configurations, one set of second configurations includes two sending resources, and the other set of second configurations includes four sending resources. The first terminal uses six sending resources to send the sidelink data from the same sidelink radio bearer to perform the repeat transmission of the sidelink data.

In some embodiments, the second configuration has an association relationship with a data characteristic.

In an embodiment of the present disclosure, the first terminal determines the repeat transmission configuration, the repeat transmission configuration includes the one or more sets of second configurations, and the second configuration has the association relationship with the data characteristic.

In some embodiments, the data characteristic includes at least one of: a QoS requirement of data; a sending method of data; a sidelink logical channel where data is located; or a sidelink radio bearer where data is located.

The data characteristic includes the QoS requirement of the data, the data characteristic includes the sending method of the data, the data characteristic includes the sidelink logical channel where the data is located, and the data characteristic includes the sidelink radio bearer where the data is located.

In some embodiments, the first terminal sends sidelink data matching the data characteristic using the sending resource.

In an embodiment of the present disclosure, the repeat transmission configuration includes the one or more sets of second configurations. The first terminal determines the repeat transmission configuration and determines the second configuration. The second configuration includes the one or more sending resources available for transmitting. The second configuration has the association relationship with the data characteristic. The repeat transmission of the sidelink data is determined according to the repeat transmission configuration. It may be determined to send the sidelink data matching the data characteristic using the sending resource.

For example, the data characteristic is the QoS requirement of the data. The first terminal may determine sidelink data matching the QoS requirement of the data, determines the one or more sending resources according to the second configuration, and sends the sidelink data matching the data characteristic using the sending resource.

It should be noted that the data characteristic may also be the sending method of the data, the sidelink logical channel where the data is located, the sidelink radio bearer where the data is located, etc. The above examples are only for illustration and are not intended to be specific limitations on the embodiments of the present disclosure.

In some embodiments, the repeat transmission configuration includes a third configuration, the third configuration is a corresponding relationship between a sidelink logical channel and a sidelink radio bearer of the sidelink data, and the sidelink radio bearer is connected to a plurality of sidelink logical channels.

In an embodiment of the present disclosure, the first terminal determines the repeat transmission configuration and determines the third configuration. The third configuration is the corresponding relationship between the sidelink logical channel and the sidelink radio bearer of the sidelink data, and the sidelink radio bearer is connected to the plurality of sidelink logical channels.

In some embodiments, the first terminal determining the repeat transmission of the sidelink data according to the repeat transmission configuration includes: the first terminal determining a first sidelink logical channel as a primary transmission sidelink logical channel of the sidelink radio bearer; and sending the sidelink data using the first sidelink logical channel in response to that the repeat transmission of the sidelink data is not started.

In an embodiment of the present disclosure, the first terminal determines the repeat transmission configuration, the repeat transmission configuration includes the third configuration, the third configuration is the corresponding relationship between the sidelink logical channel and the sidelink radio bearer of the sidelink data, and the sidelink radio bearer is connected to the plurality of sidelink logical channels. The plurality of sidelink logical channels are provided to be used to send the sidelink data in a case that the repeat transmission of the sidelink data is not started. Based on this, in an embodiment of the present disclosure, the first terminal determines the first sidelink logical channel as the primary transmission sidelink logical channel of the sidelink radio bearer, and sends the sidelink data using the first sidelink logical channel in a case that the repeat transmission of the sidelink data is not started.

The first terminal determines that the repeat transmission of the sidelink data is not started, which may be that the first terminal does not confirm the repeat transmission configuration, or may also be that the first terminal determines that the sidelink data does not match the first configuration and does not start the repeat transmission, and so on.

In an embodiment of the present disclosure, the first terminal determines the first sidelink logical channel as the primary transmission sidelink logical channel of the sidelink radio bearer, and the first sidelink logical channel is one of the plurality of sidelink logical channels connected to the sidelink radio bearer bearing the sidelink data. The first terminal may pre-determine one of the sidelink logical channels as the first sidelink logical channel, and determines the first sidelink logical channel as the primary transmission sidelink logical channel of the sidelink radio bearer.

In some embodiments, the first terminal determining the repeat transmission of the sidelink data according to the repeat transmission configuration includes: the first terminal determining the sidelink logical channel connected to the sidelink radio bearer of the sidelink data according to the third configuration; and randomly selecting one sidelink logical channel and sending the sidelink data to the randomly selected sidelink logical channel, in response to that the repeat transmission of the sidelink data is not started.

In an embodiment of the present disclosure, the first terminal determines the repeat transmission configuration, the repeat transmission configuration includes the third configuration, the third configuration is the corresponding relationship between the sidelink logical channel and the sidelink radio bearer of the sidelink data, and the sidelink radio bearer is connected to the plurality of sidelink logical channels. The first terminal determines the sidelink logical channel connected to the sidelink radio bearer of the sidelink data according to the third configuration. The plurality of sidelink logical channels are provided to be used to send the sidelink data in a case that the repeat transmission of the sidelink data is not started. Based on this, in an embodiment of the present disclosure, the first terminal randomly selects one sidelink logical channel and sends the sidelink data to the randomly selected sidelink logical channel, in a case that the repeat transmission of the sidelink data is not started.

The first terminal determines that the repeat transmission of the sidelink data is not started, which may be that the first terminal does not confirm the repeat transmission configuration, or may also be that the first terminal determines that the sidelink data does not match the first configuration and does not start the repeat transmission, and so on.

The first configuration, the second configuration, and the third configuration may be implemented separately or in any combination.

In the above embodiments provided in the present disclosure, the methods provided in the embodiments of the present disclosure are introduced from the perspectives of the first terminal, the network device and the second terminal, respectively. In order to implement the various functions in the above methods provided in the embodiments of the present disclosure, the first terminal, the network device and the second terminal may include a hardware structure and a software module to implement the above various functions in the form of the hardware structure, the software module, or the hardware structure plus the software module. A certain one of the above functions may be implemented in the form of the hardware structure, the software module, or the hardware structure plus the software module.

Referring to FIG. 11, FIG. 11 is a schematic block diagram of a communication apparatus 1 provided by an embodiment of the present disclosure. The communication apparatus 1 shown in FIG. 11 may include a transceiving module 11 and a processing module 12. The transceiving module may include a sending module and/or a receiving module. The sending module is used to implement a sending function, and the receiving module is used to implement a receiving function. The transceiving module may implement a sending function and/or a receiving function.

The communication apparatus 1 may be the first terminal, or an apparatus in the first terminal, or an apparatus that may be used in cooperation with the first terminal. Alternatively, the communication apparatus 1 may be the network device, or an apparatus in the network device, or an apparatus that may be used in cooperation with the network device. Alternatively, the communication apparatus 1 may be the first terminal, or an apparatus in the first terminal, or an apparatus that may be used in cooperation with the first terminal.

The communication apparatus 1 is applied to an NR sidelink data repeat transmission and is the first terminal.

The apparatus includes the transceiving module 11 and the processing module 12.

The processing module 12 is configured to determine a repeat transmission configuration.

The processing module 12 is further configured to determine a repeat transmission of sidelink data according to the repeat transmission configuration.

In some embodiments, the transceiving module 11 is configured to receive configuration information sent by a network device or a second terminal. The processing module 12 is further configured to determine the repeat transmission configuration according to the configuration information.

In some embodiments, the repeat transmission configuration includes one or more sets of first configurations, and the first configuration includes at least one of: a sidelink destination address; a specified sending method; a specified sending content; a specified sidelink radio bearer; or a specified quality of service (QoS) requirement of data.

In some embodiments, the processing module 12 is further configured to determine to start a repeat transmission of sidelink data matching the first configuration, and send the sidelink data to a plurality of sidelink logical channels connected to a sidelink radio bearer bearing the sidelink data.

In some embodiments, the sidelink logical channel is determined by a sidelink radio link control (RLC) entity.

In some embodiments, the first configuration has an association relationship with a number of sidelink logical channels available for sending.

In some embodiments, the processing module 12 is further configured to determine a specified number of the sidelink logical channels according to the first configuration; and determine to start a repeat transmission of sidelink data matching the first configuration, and transmit the sidelink data to the specified number of sidelink logical channels connected to a sidelink radio bearer of the sidelink data.

In some embodiments, the repeat transmission configuration includes one or more sets of second configurations, and the second configuration includes one or more sending resources available for transmitting.

In some embodiments, the sending resource is a sidelink sending frequency or a sidelink sending resource pool.

In some embodiments, the transceiving module 11 is further configured to send the sidelink data for the repeat transmission using the sending resource.

In some embodiments, the transceiving module 11 is further configured to send the sidelink data from the same sidelink radio bearer using different sending resources.

In some embodiments, the second configuration has an association relationship with a data characteristic.

In some embodiments, the data characteristic includes at least one of: a QoS requirement of data; a sending method of data; a sidelink logical channel where data is located; or a sidelink radio bearer where data is located.

In some embodiments, the transceiving module 11 is further configured to send sidelink data matching the data characteristic using the sending resource.

In some embodiments, the repeat transmission configuration includes a third configuration, the third configuration is a corresponding relationship between a sidelink logical channel and a sidelink radio bearer of the sidelink data, and the sidelink radio bearer is connected to a plurality of sidelink logical channels.

In some embodiments, the processing module 12 is further configured to determine a first sidelink logical channel as a primary transmission sidelink logical channel of the sidelink radio bearer; and the transceiving module 11 is further configured to send the sidelink data using the first sidelink logical channel in response to that the repeat transmission of the sidelink data is not started.

In some embodiments, the processing module 12 is further configured to determine the sidelink logical channel connected to the sidelink radio bearer of the sidelink data according to the third configuration; and the transceiving module 11 is further configured to randomly select one sidelink logical channel and send the sidelink data to the randomly selected sidelink logical channel, in response to that the repeat transmission of the sidelink data is not started.

The communication apparatus 1 is applied to an NR sidelink data repeat transmission and is the network device or the second terminal.

The apparatus includes the transceiving module 11.

The transceiving module 11 is configured to send configuration information for determining a repeat transmission configuration to a first terminal. The repeat transmission configuration instructs the first terminal to determine a repeat transmission of sidelink data.

In some embodiments, the repeat transmission configuration includes one or more sets of first configurations, and the first configuration includes at least one of: a sidelink destination address; a specified sending method; a specified sending content; a specified sidelink radio bearer; or a specified quality of service (QoS) requirement of data.

In some embodiments, the first configuration has an association relationship with a number of sidelink logical channels available for sending.

In some embodiments, the repeat transmission configuration includes one or more sets of second configurations, and the second configuration includes one or more sending resources available for transmitting.

In some embodiments, the sending resource is a sidelink sending frequency or a sidelink sending resource pool.

In some embodiments, the second configuration has an association relationship with a data characteristic.

In some embodiments, the data characteristic includes at least one of: a QoS requirement of data; a sending method of data; a sidelink logical channel where data is located; or a sidelink radio bearer where data is located.

In some embodiments, the repeat transmission configuration includes a third configuration, the third configuration is a corresponding relationship between a sidelink logical channel and a sidelink radio bearer of the sidelink data, and the sidelink radio bearer is connected to a plurality of sidelink logical channels.

Regarding the communication apparatus 1 in the above embodiments, the specific manner in which each module performs operations has been described in detail in the embodiments of the related methods, and will not be elaborated here.

The communication apparatus 1 provided in the above embodiments of the present disclosure achieves the same or similar beneficial effects as the methods for data transmission provided in some of the above embodiments, which will not be repeated here.

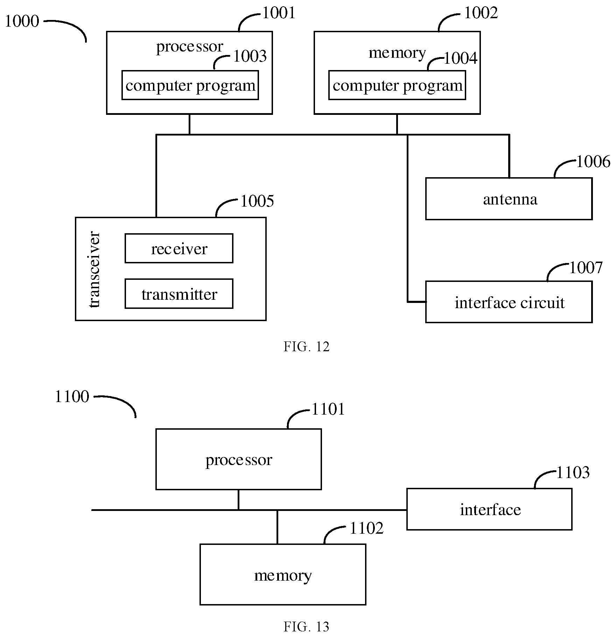

Referring to FIG. 12, FIG. 12 is a schematic block diagram of another communication apparatus 1000 provided by an embodiment of the present disclosure, the communication apparatus 1000 may be a network device, may also be a terminal, may also be a chip, a chip system, or a processor that supports the network device to implement the above methods, and may also be a chip, a chip system, or a processor that supports the terminal to implement the above methods. The communication apparatus 1000 may be configured to implement the methods as described in the above method embodiments, and for details, reference may be made to the descriptions in the above method embodiments.

The communication apparatus 1000 may include one or more processors 1001. The processor 1001 may be a general-purpose processor or a special-purpose processor. For example, it may be a baseband processor or a central processing unit. The baseband processor may be configured to process a communication protocol and communication data, and the central processing unit may be configured to control the communication apparatus (such as the network device, a baseband chip, the terminal, a terminal chip, a DU or a CU, etc.), execute computer programs, and process data of computer programs.

Optionally, the communication apparatus 1000 may further include one or more memories 1002 having stored a computer program 1004 therein. The processor 1001 executes the computer program 1004, to cause the communication apparatus 1000 to implement the methods as described in the above method embodiments. Optionally, the memory 1002 may have stored data therein. The communication apparatus 1000 and the memory 1002 may be provided separately or integrated together.

Optionally, the communication apparatus 1000 may further include a transceiver 1005 and an antenna 1006. The transceiver 1005 may be called a transceiving unit, a transceiving machine, a transceiving circuit or the like, for implementing a transceiving function. The transceiver 1005 may include a receiver and a transmitter. The receiver may be called a receiving machine, a receiving circuit or the like, for implementing a receiving function. The transmitter may be called a transmitting machine, a transmitting circuit or the like, for implementing a transmitting function.

Optionally, the communication apparatus 1000 may further include one or more interface circuits 1007. The interface circuit 1007 is configured to receive a code instruction and transmit the code instruction to the processor 1001. The processor 1001 runs the code instruction to enable the communication apparatus 1000 to execute the methods as described in the foregoing method embodiments.

In a case that the communication apparatus 1000 is the first terminal, the processor 1001 is configured to execute steps S21 and S22 in FIG. 2; step S31 in FIG. 3; step S41 in FIG. 4; step S51 in FIG. 5; step S61 in FIG. 6; step S71 in FIG. 7; and step S81 in FIG. 8; and the transceiver 1005 is configured to execute step S32 in FIG. 3; step S42 in FIG. 4; step S52 in FIG. 5; step S62 in FIG. 6; step S72 in FIG. 7; and step S82 in FIG. 8.

In a case that the communication apparatus 1000 is the network device, the transceiver 1005 is configured to execute step S91 in FIG. 9.

In a case that the communication apparatus 1000 is the second terminal, the transceiver 1005 is configured to execute step S101 in FIG. 10.

In an implementation, the processor 1001 may include the transceiver configured to implement receiving and transmitting functions. For example, the transceiver may be a transceiving circuit, an interface, or an interface circuit. The transceiving circuit, the interface or the interface circuit configured to implement the receiving and transmitting functions may be separated or may be integrated together. The above transceiving circuit, interface or interface circuit may be configured to read or write codes/data, or the above transceiving circuit, interface or interface circuit may be configured to transmit or transfer signals.

In an implementation, the processor 1001 may have stored therein a computer program 1003 that, when run on the processor 1001, causes the communication apparatus 1000 to implement the methods as described in the foregoing method embodiments. The computer program 1003 may be programmed in the processor 1001, and in this case, the processor 1001 may be implemented by a hardware.

In an implementation, the communication apparatus 1000 may include a circuit, and the circuit may implement the sending, receiving or communicating function in the foregoing method embodiments. The processor and the transceiver described in the present disclosure may be implemented on an integrated circuit (IC), an analog IC, a radio frequency integrated circuit (RFIC), a mixed-signal IC, an application specific integrated circuit (ASIC), a printed circuit board (PCB), an electronic device, etc. The processor and the transceiver may also be manufactured using various IC process technologies, such as a complementary metal oxide semiconductor (CMOS), a negative metal-oxide-semiconductor (NMOS), a positive channel metal oxide semiconductor (PMOS), a bipolar junction transistor (BJT), a bipolar CMOS (BiCMOS), silicon germanium (SiGe), gallium arsenide (GaAs), etc.

The communication apparatus described in the above embodiments may be the terminal, but the scope of the communication apparatus described in the present disclosure is not limited thereto, and a structure of the communication apparatus may be not limited by FIG. 12. The communication apparatus may be a stand-alone device or may be a part of a large device. For example, the communication apparatus may be: (1) a stand-alone integrated circuit (IC), or a chip, or a chip system or subsystem; (2) a set of one or more ICs, optionally, the set of ICs may also include a storage component for storing data and computer programs; (3) an ASIC, such as a modem; (4) a module that may be embedded in other devices; (5) a receiver, a terminal, an intelligent terminal, a cellular phone, a wireless device, a handheld machine, a mobile unit, an on-board device, a network device, a cloud device, an artificial intelligence device, etc.; (6) others.

For the case that the communication apparatus may be a chip or a chip system, reference may be made to FIG. 13, which is a block diagram of a chip provided by an embodiment of the present disclosure.

The chip 1100 includes a processor 1101 and an interface 1103. One or more processors 1101 may be provided, and a plurality of interfaces 1103 may be provided.

For the case that the chip is configured to implement functions of the network device in the embodiments of the present disclosure, the interface 1103 is configured to receive code instructions and transmit the code instructions to the processor, and the processor 1101 is configured to run the code instructions to perform the methods for data transmission according to some of the above embodiments.

For the case that the chip is configured to implement functions of the terminal in the embodiments of the present disclosure, the interface 1103 is configured to receive code instructions and transmit the code instructions to the processor, and the processor 1101 is configured to run the code instructions to perform the methods for data transmission according to some of the above embodiments.

Optionally, the chip 1100 further includes a memory 1102 for storing necessary computer programs and data.

Those skilled in the art may also understand that various illustrative logical blocks and steps listed in the embodiments of the present disclosure may be implemented by electronic hardware, computer software, or a combination thereof. Whether such functions are implemented by hardware or software depends on specific applications and design requirements of an overall system. For each specific application, those skilled in the art may use various methods to implement the described functions, but such an implementation should not be understood as extending beyond the protection scope of the embodiments of the present disclosure.

Embodiments of the present disclosure also provide a system for data transmission. The system includes the communication apparatus serving as the terminal and the communication apparatus serving as the network device in the aforementioned embodiments in FIG. 11, or the system includes the communication apparatus serving as the terminal and the communication apparatus serving as the network device in the aforementioned embodiments in FIG. 12.

The present disclosure also provides a readable storage medium having stored thereon instructions that, when executed by a computer, cause functions of any of the above method embodiments to be implemented.

The present disclosure also provides a computer program product that, when executed by a computer, causes functions of any of the above method embodiments to be implemented.

The above embodiments may be implemented in whole or in part by software, hardware, firmware or any combination thereof. When implemented using software, the above embodiments may be implemented in whole or in part in a form of the computer program product. The computer program product includes one or more computer programs. When the computer program is loaded and executed on the computer, all or some of the processes or functions according to the embodiments of the present disclosure will be generated. The computer may be a general purpose computer, a special purpose computer, a computer network, or other programmable devices. The computer program may be stored in a computer-readable storage medium or transmitted from one computer-readable storage medium to another computer-readable storage medium. For example, the computer program may be transmitted from one website, computer, server or data center to another website, computer, server or data center in a wired manner (such as via a coaxial cable, an optical fiber, a digital subscriber line (DSL)) or a wireless manner (such as infrared, wireless, or microwave, etc.). The computer-readable storage medium may be any available medium that may be accessed by the computer, or a data storage device such as the server or the data center integrated with one or more available media. The available medium may be a magnetic medium (for example, a floppy disk, a hard disk, or a magnetic tape), an optical medium (for example, a high-density digital video disc (DVD)), or a semiconductor medium (for example, a solid state disk (SSD)), etc.

Those ordinary skilled in the art may understand that the first, second, and other numeral numbers involved in the present disclosure are distinguished only for convenience of description, and are not intended to limit the scope of the embodiments of the present disclosure, and nor are they intended to represent a sequential order.

The term "at least one" used in the present disclosure may also be described as one or more, and the term "a plurality of" may cover two, three, four or more, which are not limited in the present disclosure. In embodiments of the present disclosure, for a certain kind of technical feature, the technical features in this kind of technical feature are distinguished by terms like "first", "second", "third", "A", "B", "C" and "D", etc., and these technical features described with the terms like "first", "second", "third", "A", "B", "C" and "D" have no order of priority and also have no order of size.

The correspondence shown in each table in the present disclosure may be configured or predefined. The values of information in each table are just examples, and may be configured as other values, which are not limited in the present disclosure. When configuring a correspondence between the information and various parameters, it is not necessary to configure all the correspondences shown in the tables. For example, the correspondences shown in some rows of the tables in the present disclosure may not be configured. For another example, appropriate variations or adjustments (such as splitting, merging, and so on) may be made based on the above tables. The names of parameters shown in the titles of the above tables may also adopt other names understandable in the communication apparatus, and the values or representations of the parameters may also be other values or representations understandable in the communication apparatus. When the above tables are implemented, other data structures may also be used, for example, arrays, queues, containers, stacks, linear tables, pointers, linked lists, trees, graphs, structural bodies, classes, heaps, or hash tables may be used.

The term "predefinition" in the present disclosure may be understood as definition, pre-definition, storage, pre-storage, pre-negotiation, pre-configuration, programming, or pre-burning.

Those ordinary skilled in the art may appreciate that the units and algorithm steps of various examples described in conjunction with embodiments disclosed herein may be implemented by electronic hardware, or a combination of computer software and electronic hardware. Whether these functions are executed by hardware or software depends on the specific applications and design constraints of the technical solution. For each particular application, those skilled in the art may use different methods to implement the described functions, but such an implementation should not be considered as extending beyond the scope of the present disclosure.

Those skilled in the art may clearly understand that for the convenience and brevity of description, for the specific working process of the above system, apparatus and unit, reference may be made to the corresponding process in the foregoing method embodiments, which will not be repeated here.

The above only describes some specific implementations of the present disclosure, but the protection scope of the present disclosure is not limited thereto. Any changes or substitutions that are conceivable to those skilled in the art within the technical scope of the present disclosure should fall within the protection scope of the present disclosure. Therefore, the protection scope of the present disclosure should be determined by the protection scope of the claims.

## Claims

1. A method for data transmission, applied to a new radio, NR, sidelink data repeat transmission, performed by a first terminal, comprising:
determining (S21) a repeat transmission configuration; and
determining (S22) a repeat transmission of sidelink data according to the repeat transmission configuration,
**characterized in that**, the repeat transmission configuration comprises one or more sets of first configurations, and the first configuration comprises a specified sidelink radio bearer,
wherein determining (S22) the repeat transmission of the sidelink data according to the repeat transmission configuration comprises:
determining (S32) to start a repeat transmission of sidelink data matching the first configuration, and sending the sidelink data to a plurality of sidelink logical channels connected to a sidelink radio bearer bearing the sidelink data.

2. The method according to claim 1, wherein the repeat transmission configuration comprises one or more sets of first configurations, and the first configuration further comprises at least one of:
a sidelink destination address;
a specified sending method;
a specified sending content;
or
a specified quality of service, QoS, requirement of data.

3. The method according to claim 1, wherein the sidelink logical channel is determined by a sidelink radio link control, RLC, entity.

4. The method according to claim 2, wherein the first configuration comprises the specified QoS requirement of data, and the specified QoS requirement of data is configured to be indicated by a sending file.

5. The method according to any one of claims 1 to 4, wherein the repeat transmission configuration comprises one or more sets of second configurations, and the second configuration comprises one or more sending resources available for transmitting;
wherein the sending resource is a sidelink sending frequency or a sidelink sending resource pool; and
wherein the second configuration has an association relationship with a data characteristic.

6. The method according to claim 5, further comprising:
sending (S52) the sidelink data for the repeat transmission using the sending resource,
wherein sending (S52) the sidelink data for the repeat transmission using the sending resource comprises:
sending the sidelink data from a same sidelink radio bearer using different sending resources.

7. The method according to claim 6, wherein the data characteristic comprises at least one of:
a QoS requirement of data;
a sending method of data;
a sidelink logical channel where data is located; or
a sidelink radio bearer where data is located.

8. A method for data transmission, applied to a new radio, NR, sidelink data repeat transmission, performed by a network device or a second terminal, comprising:
sending (S91, S101) configuration information for determining a repeat transmission configuration to a first terminal, wherein the repeat transmission configuration instructs the first terminal to determine a repeat transmission of sidelink data,
**characterized in that**, the repeat transmission configuration comprises one or more sets of first configurations, and the first configuration comprises a specified sidelink radio bearer,
wherein the repeat transmission configuration further instructs the first terminal to:
determine to start a repeat transmission of sidelink data matching the first configuration, and send the sidelink data to a plurality of sidelink logical channels connected to a sidelink radio bearer bearing the sidelink data.

9. The method according to claim 8, wherein the repeat transmission configuration comprises one or more sets of first configurations, and the first configuration further comprises at least one of:
a sidelink destination address;
a specified sending method;
a specified sending content;
or
a specified quality of service, QoS, requirement of data.

10. The method according to claim 8 or 9, wherein the repeat transmission configuration comprises one or more sets of second configurations, and the second configuration comprises one or more sending resources available for transmitting;
wherein the sending resource is a sidelink sending frequency or a sidelink sending resource pool; and
wherein the second configuration has an association relationship with a data characteristic.

11. The method according to claim 10, wherein the data characteristic comprises at least one of:
a QoS requirement of data;
a sending method of data;
a sidelink logical channel where data is located; or
a sidelink radio bearer where data is located.

12. A communication apparatus (1000), comprising:
a processor (1001); and
a memory (1002) storing a computer program (1004),
wherein the processor (1001), when executing the computer program (1004) stored in the memory (1002), causes the apparatus (1000) to perform a method according to any one of claims 1 to 7, or cause the apparatus (1000) to perform a method according to any one of claims 8 to 11.

13. A communication apparatus (1000), comprising a processor (1001) and an interface circuit (1007),
wherein the interface circuit (1007) is configured to receive code instructions and transmit the code instructions to the processor (1001); and
the processor (1001) is configured to run the code instructions to perform a method according to any one of claims 1 to 7, or is configured to run the code instructions to perform a method according to any one of claims 8 to 11.

14. A computer-readable storage medium, storing instructions that, when executed by a processor of a first terminal, cause a method according to any one of claims 1 to 7 to be implemented, or when executed by a processor of a network device or a processor of a second terminal, cause a method according to any one of claims 8to 11 to be implemented.

## Patentansprüche

1. Ein Verfahren zur Datenübertragung, angewendet auf eine New-Radio-, NR-, Sidelink-Datenwiederholungsübertragung, durchgeführt durch ein erstes Endgerät, wobei das Verfahren folgende Schritte aufweist:
Bestimmen (S21) einer Wiederholungsübertragungskonfiguration; und
Bestimmen (S22) einer Wiederholungsübertragung von Sidelink-Daten gemäß der Wiederholungsübertragungskonfiguration,
**dadurch gekennzeichnet, dass** die Wiederholungsübertragungskonfiguration einen oder mehrere Sätze von ersten Konfigurationen aufweist und die erste Konfiguration einen spezifizierten Sidelink-Funkträger aufweist,
wobei das Bestimmen (S22) der Wiederholungsübertragung der Sidelink-Daten gemäß der Wiederholungsübertragungskonfiguration folgende Schritte aufweist:
Bestimmen (S32), eine Wiederholungsübertragung von Sidelink-Daten zu starten, die mit der ersten Konfiguration übereinstimmen, und Senden der Sidelink-Daten an eine Mehrzahl von logischen Sidelink-Kanälen, die mit einem Sidelink-Funkträger verbunden sind, der die Sidelink-Daten trägt.

2. Das Verfahren gemäß Anspruch 1, wobei die Wiederholungsübertragungskonfiguration einen oder mehrere Sätze von ersten Konfigurationen aufweist und die erste Konfiguration ferner zumindest eines der folgenden Merkmale aufweist:
eine Sidelink-Zieladresse;
ein spezifiziertes Sendeverfahren;
einen spezifizierten Sendeinhalt;
oder
eine spezifizierte Dienstgüte-, QoS-, Anforderung von Daten.

3. Das Verfahren gemäß Anspruch 1, wobei der logische Sidelink-Kanal durch eine Sidelink-Funkverbindungssteuerungs-, RLC-, Entität bestimmt wird.

4. Das Verfahren gemäß Anspruch 2, wobei die erste Konfiguration die spezifizierte QoS-Anforderung von Daten aufweist und die spezifizierte QoS-Anforderung von Daten dazu konfiguriert ist, durch eine Sendedatei angezeigt zu werden.

5. Das Verfahren gemäß einem der Ansprüche 1 bis 4, wobei die Wiederholungsübertragungskonfiguration einen oder mehrere Sätze von zweiten Konfigurationen aufweist und die zweite Konfiguration eine oder mehrere Senderessourcen aufweist, die zum Übertragen verfügbar sind;
wobei die Senderessource eine Sidelink-Sendefrequenz oder ein Sidelink-Senderessourcenpool ist; und
wobei die zweite Konfiguration eine Zuordnungsbeziehung mit einer Datencharakteristik aufweist.

6. Das Verfahren gemäß Anspruch 5, das ferner folgenden Schritt aufweist:
Senden (S52) der Sidelink-Daten für die Wiederholungsübertragung unter Verwendung der Senderessource,
wobei das Senden (S52) der Sidelink-Daten für die Wiederholungsübertragung unter Verwendung der Senderessource folgenden Schritt aufweist:
Senden der Sidelink-Daten von einem gleichen Sidelink-Funkträger unter Verwendung unterschiedlicher Senderessourcen.

7. Das Verfahren gemäß Anspruch 6, wobei die Datencharakteristik zumindest eines der folgenden Merkmale aufweist:
eine QoS-Anforderung von Daten;
ein Sendeverfahren von Daten;
einen logischen Sidelink-Kanal, auf dem sich Daten befinden; oder
einen Sidelink-Funkträger, auf dem sich Daten befinden.

8. Ein Verfahren zur Datenübertragung, angewendet auf eine New-Radio-, NR-, Sidelink-Datenwiederholungsübertragung, durchgeführt durch eine Netzwerkvorrichtung oder ein zweites Endgerät, wobei das Verfahren folgende Schritte aufweist:
Senden (S91, S101) von Konfigurationsinformationen zum Bestimmen einer Wiederholungsübertragungskonfiguration an ein erstes Endgerät, wobei die Wiederholungsübertragungskonfiguration das erste Endgerät anweist, eine Wiederholungsübertragung von Sidelink-Daten zu bestimmen,
**dadurch gekennzeichnet, dass** die Wiederholungsübertragungskonfiguration einen oder mehrere Sätze von ersten Konfigurationen aufweist und die erste Konfiguration einen spezifizierten Sidelink-Funkträger aufweist,
wobei die Wiederholungsübertragungskonfiguration ferner das erste Endgerät anweist zum:
Bestimmen, eine Wiederholungsübertragung von Sidelink-Daten zu starten, die mit der ersten Konfiguration übereinstimmen, und Senden der Sidelink-Daten an eine Mehrzahl von logischen Sidelink-Kanälen, die mit einem Sidelink-Funkträger verbunden sind, der die Sidelink-Daten trägt.

9. Das Verfahren gemäß Anspruch 8, wobei die Wiederholungsübertragungskonfiguration einen oder mehrere Sätze von ersten Konfigurationen aufweist und die erste Konfiguration ferner zumindest eines der folgenden Merkmale aufweist:
eine Sidelink-Zieladresse;
ein spezifiziertes Sendeverfahren;
einen spezifizierten Sendeinhalt;
oder
eine spezifizierte Dienstgüte-, QoS-, Anforderung von Daten.

10. Das Verfahren gemäß Anspruch 8 oder 9, wobei die Wiederholungsübertragungskonfiguration einen oder mehrere Sätze von zweiten Konfigurationen aufweist und die zweite Konfiguration eine oder mehrere Senderessourcen aufweist, die zum Übertragen verfügbar sind;
wobei die Senderessource eine Sidelink-Sendefrequenz oder ein Sidelink-Senderessourcenpool ist; und
wobei die zweite Konfiguration eine Zuordnungsbeziehung mit einer Datencharakteristik aufweist.

11. Das Verfahren gemäß Anspruch 10, wobei die Datencharakteristik zumindest eines der folgenden Merkmale aufweist:
eine QoS-Anforderung von Daten;
ein Sendeverfahren von Daten;
einen logischen Sidelink-Kanal, auf dem sich Daten befinden; oder
einen Sidelink-Funkträger, auf dem sich Daten befinden.

12. Eine Kommunikationsvorrichtung (1000), die folgende Merkmale aufweist:
einen Prozessor (1001); und
einen Speicher (1002), der ein Computerprogramm (1004) speichert,
wobei der Prozessor (1001) bei Ausführung des in dem Speicher (1002) gespeicherten Computerprogramms (1004) bewirkt, dass die Vorrichtung (1000) ein Verfahren gemäß einem der Ansprüche 1 bis 7 durchführt, oder bewirkt, dass die Vorrichtung (1000) ein Verfahren gemäß einem der Ansprüche 8 bis 11 durchführt.

13. Eine Kommunikationsvorrichtung (1000), die einen Prozessor (1001) und eine Schnittstellenschaltung (1007) aufweist,
wobei die Schnittstellenschaltung (1007) dazu konfiguriert ist, Codeanweisungen zu empfangen und die Codeanweisungen an den Prozessor (1001) zu übertragen; und
der Prozessor (1001) dazu konfiguriert ist, die Codeanweisungen auszuführen, um ein Verfahren gemäß einem der Ansprüche 1 bis 7 durchzuführen, oder dazu konfiguriert ist, die Codeanweisungen auszuführen, um ein Verfahren gemäß einem der Ansprüche 8 bis 11 durchzuführen.

14. Ein computerlesbares Speichermedium, das Anweisungen speichert, die bei Ausführung durch einen Prozessor eines ersten Endgeräts bewirken, dass ein Verfahren gemäß einem der Ansprüche 1 bis 7 implementiert wird, oder bei Ausführung durch einen Prozessor einer Netzwerkvorrichtung oder einen Prozessor eines zweiten Endgeräts bewirken, dass ein Verfahren gemäß einem der Ansprüche 8 bis 11 implementiert wird.

## Revendications

1. Procédé de transmission de données, appliqué à la retransmission de données sur liaison latérale d'un nouveau système radio (NR), effectué par un premier terminal, comprenant :
la détermination (S21) d'une configuration de retransmission ; et
la détermination (S22) d'une retransmission des données de liaison latérale selon la configuration de retransmission,
**caractérisé en ce que** la configuration de retransmission comprend un ou plusieurs ensembles de premières configurations, et la première configuration comprend un support radio de liaison latérale spécifié,
dans lequel la détermination (S22) de la retransmission des données de liaison latérale selon la configuration de retransmission comprend :
la détermination (S32) de lancer une retransmission des données de liaison latérale correspondant à la première configuration, et l'envoi des données de liaison latérale vers une pluralité de canaux logiques de liaison latérale connectés à un support radio de liaison latérale transportant les données de liaison latérale.

2. Procédé selon la revendication 1, dans lequel la configuration de retransmission comprend un ou plusieurs ensembles de premières configurations, et la première configuration comprend en outre au moins l'un :
d'une adresse de destination de liaison latérale ;
d'un procédé d'envoi spécifié ;
d'un contenu d'envoi spécifié ;
ou
d'une exigence de qualité de service (QoS) spécifiée des données.

3. Procédé selon la revendication 1, dans lequel le canal logique de liaison latérale est déterminé par une entité de contrôle de liaison radio (RLC) de liaison latérale.

4. Procédé selon la revendication 2, dans lequel la première configuration comprend l'exigence de qualité de service (QoS) spécifiée pour les données, et l'exigence de qualité de service (QoS) spécifiée pour les données est configurée pour être indiquée par un fichier d'envoi.

5. Procédé selon l'une quelconque des revendications 1 à 4, dans lequel la configuration de retransmission comprend un ou plusieurs ensembles de deuxièmes configurations, et la deuxième configuration comprend une ou plusieurs ressources d'émission disponibles pour la transmission ;
dans lequel la ressource d'émission est une fréquence d'émission de liaison latérale ou un pool de ressources d'émission de liaison latérale ; et
dans lequel la deuxième configuration a une relation d'association avec une caractéristique de données.

6. Procédé selon la revendication 5, comprenant en outre :
l'envoi (S52) des données de liaison latérale pour la retransmission à l'aide de la ressource d'émission,
dans lequel l'envoi (S52) des données de liaison latérale pour la retransmission à l'aide de la ressource d'envoi comprend :
l'envoi des données de liaison latérale à partir d'un même support radio de liaison latérale à l'aide de différentes ressources d'émission.

7. Procédé selon la revendication 6, dans lequel la caractéristique de données comprend au moins l'un :
d'une exigence de qualité de service (QoS) de données ;
d'un procédé d'envoi de données ;
d'un canal logique de liaison latérale sur lequel se trouvent les données ; ou
d'un support radio de liaison latérale sur lequel se trouvent les données.

8. Procédé de transmission de données, appliqué à la retransmission de données sur la liaison latérale d'un nouveau système radio (NR), effectuée par un dispositif réseau ou un deuxième terminal, comprenant :
l'envoi (S91, S101) d'informations de configuration pour déterminer une configuration de retransmission à un premier terminal, dans lequel la configuration de retransmission indique au premier terminal de déterminer une retransmission de données de liaison latérale,
**caractérisé en ce que** la configuration de retransmission comprend un ou plusieurs ensembles de premières configurations, et la première configuration comprend un support radio de liaison latérale spécifié,
dans lequel la configuration de retransmission indique en outre au premier terminal de :
déterminer à lancer une retransmission des données de liaison latérale correspondant à la première configuration, et l'envoi des données de liaison latérale vers une pluralité de canaux logiques de liaison latérale connectés à un support radio de liaison latérale transportant les données de liaison latérale.

9. Procédé selon la revendication 8, dans lequel la configuration de retransmission comprend un ou plusieurs ensembles de premières configurations, et la première configuration comprend en outre au moins l'un :
d'une adresse de destination de liaison latérale ;
d'un procédé d'envoi spécifié ;
d'un contenu d'envoi spécifié ;
ou
d'une exigence de qualité de service (QoS) spécifiée pour les données.

10. Procédé selon la revendication 8 ou 9, dans lequel la configuration de retransmission comprend un ou plusieurs ensembles de deuxièmes configurations, et la deuxième configuration comprend une ou plusieurs ressources d'émission disponibles pour la transmission ;
dans lequel la ressource d'émission est une fréquence d'émission de liaison latérale ou un pool de ressources d'émission de liaison latérale ; et
dans lequel la deuxième configuration entretient une relation d'association avec une caractéristique de données.

11. Procédé selon la revendication 10, dans lequel la caractéristique de données comprend au moins l'un :
d'une exigence de qualité de service (QoS) de données ;
d'un procédé d'envoi de données ;
d'un canal logique de liaison latérale sur lequel se trouvent les données ; ou
d'un support radio de liaison latérale sur lequel se trouvent les données.

12. Dispositif de communication (1000), comprenant :
un processeur (1001) ; et
une mémoire (1002) contenant un programme informatique (1004),
dans lequel le processeur (1001), lors de l'exécution du programme informatique (1004) stocké dans la mémoire (1002), amène le dispositif (1000) à mettre en œuvre un procédé selon l'une quelconque des revendications 1 à 7, ou amène le dispositif (1000) à mettre en œuvre un procédé selon l'une quelconque des revendications 8 à 11.

13. Dispositif de communication (1000), comprenant un processeur (1001) et un circuit d'interface (1007),
dans lequel le circuit d'interface (1007) est configuré pour recevoir des instructions de code et transmettre les instructions de code au processeur (1001) ; et
le processeur (1001) est configuré pour exécuter les instructions de code pour mettre en œuvre un procédé selon l'une quelconque des revendications 1 à 7, ou est configuré pour exécuter les instructions de code pour mettre en œuvre un procédé selon l'une quelconque des revendications 8 à 11.

14. Support de stockage lisible par ordinateur, contenant des instructions qui, lorsqu'elles sont exécutées par un processeur d'un premier terminal, entraînent la mise en œuvre d'un procédé selon l'une quelconque des revendications 1 à 7, ou, lorsqu'elles sont exécutées par un processeur d'un dispositif réseau ou par un processeur d'un second terminal, entraînent la mise en œuvre d'un procédé selon l'une quelconque des revendications 8 à 11.
